(19) Europäisches Patentamt
European Patent Office
Office européen des brevets

(11) **EP 4 604 470 A1**

(12) **EUROPEAN PATENT APPLICATION**

(43) Date of publication:
**20.08.2025 Bulletin 2025/34**

(21) Application number: **24157872.3**

(22) Date of filing: **15.02.2024**

(51) International Patent Classification (IPC):
$H04L\ 27/18$ (2006.01)    $H04L\ 27/20$ (2006.01)
$H04L\ 5/00$ (2006.01)    $H04L\ 27/26$ (2006.01)
$H04B\ 7/06$ (2006.01)    $H04B\ 7/08$ (2006.01)

(52) Cooperative Patent Classification (CPC):
**H04L 5/001; H04B 7/068; H04B 7/086;
H04L 5/0023; H04L 5/0044**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Friedrich-Alexander-Universität
Erlangen-Nürnberg
91054 Erlangen (DE)**

(72) Inventor: **MÜLLER, Ralf R.
91054 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **TRANSMITTER AND METHOD FOR TRANSMITTING A DATA SIGNAL OVER MULTIPLE ANTENNAS**

(57)     A transmitter and method for transmitting a data signal over a plurality of carriers of a radio channel are disclosed. The radio channel has a channel bandwidth comprising the plurality of carriers. The data signal has a plurality of data symbols. A phase of a carrier signal of each carrier transmitting a data symbol is adjusted for modulating a data symbol on a carrier, and each carrier is transmitted over a separate antenna. The phase of the carrier signal of one carrier, which transmits a data symbol at the highest frequency in the channel bandwidth, is adjusted such that any instantaneous frequency of the carrier signal deviates towards the center frequency of the channel bandwidth, and the phase of the carrier signal of another carrier, which transmits a data symbol at the lowest frequency in the channel bandwidth, is adjusted such that any instantaneous frequency of the carrier signal deviates towards the center of the channel bandwidth.

| providing a source signal including data symbols | S100 |

modulating a first data symbol on a first carrier at a highest frequency in a channel bandwidth by adjusting a phase of a carrier signal of the first carrier so that its instantaneous frequency deviates towards a center frequency of the channel bandwidth — S102

modulating a second data symbol on a second carrier at a lowest frequency in the channel bandwidth by adjusting a phase of a carrier signal of the second carrier so that its instantaneous frequency deviates towards the center frequency of the channel bandwidth — S104

transmitting the first and second carriers over separate antennas — S106

Fig. 1

EP 4 604 470 A1

**Description**

The present invention relates to the field of wireless communication systems or networks and, more specifically, to transmitting a data signal, which includes a plurality of data symbols, over a plurality of carriers of a radio channel which has a channel bandwidth including the plurality of carriers. Embodiments of the present invention concern the transmission of a data signal over a plurality of carriers of a radio channel avoiding or reducing interferences while allowing for a low complexity implementation.

**Background**

Wireless communication at increasingly high frequencies reduces the effective antenna area due to the smaller wave lengths. As a result, the link budget is reduced even for signal propagation in free space. This effect is often referred to as higher free-space attenuation at higher frequencies.

To make up for the required link budget, i.e., the required antenna area, a conventional approach is to stack antenna elements into arrays in order to aggregate the effective antenna areas of the individual antenna elements. At a receiver this approach is equivalent to spatial beamforming. At the transmitter, spatial beamforming may also be used.

While beamforming dominates conventional approaches, it has the following issues.

*Beam alignment*

Since receivers naturally use beamforming to increase their link budgets, transmitter beams and receiver beams have to find each other. Although, efficient algorithms for beam alignment do exist, see for example [1], [2], problems remain, see for example [3]:

(a) For transmissions of short messages, the overhead of beam alignment is prohibitive. This disqualifies beam alignment for IoT-applications.
(b) Beam alignment takes time. The time to set-up a connection may be prohibitive for certain application.
(c) Forming a beam towards multiple receivers compromises the link budget. The broadcast of a common message to multiple receivers is very inefficient. This renders many algorithms of network coding, e.g., coded caching impossible, in practice.

*Insertion Losses*

Transmit beamforming is often implemented via phase shifters at the various antenna elements. These phase shifters consume a certain fraction of the power of the transmit signal. This is known as insertion loss. While progress in semiconductor technology results in reduced insertion loss, it is generally the larger the higher is the carrier frequency. The loss may be avoided, if the signal is amplified after phase shifting. This requires a separate power amplifier for each antenna element, see for example [4].

*Wideband RF-Hardware*

All antennas send the same data. In order to squeeze the same amount of data into a given volume of space-time, data must change in time at maximum rate, as it does not change in space, at all. Therefore, all RF-components must be capable of operating over the full bandwidth of the radio channel. Violations of the wideband properties may lead to the beam split phenomenon, also called beam squint, see for example [5].

*Signal Crest*

Heisenberg's Uncertainty Principle prohibits a signal to be well-constrained in both time and frequency. Therefore, a signal whose symbol rate is similar to its bandwidth, cannot be strongly constrained in time. A time-constraint like constant envelope, therefore, results in heavy spectral sidelobes, unless it is a complex sinusoid. Vice-versa, spectral confinement results in amplitude variations. With today's hardware technology, amplitude variations incur major issues, see for example [6]:

(a) The higher the amplitude variation, the more the amplifier must be backed-off. The higher the back-off, the lower is the efficiency of the amplifier and the higher is the cost of the hardware for fixed average transmit power.
(b) Amplifiers convert amplitude variations into nonlinear signal distortions. These distortions pose various problems:

i. They reduce the reliability of signal detection at the receiver side.
ii. They create spectral re-growth at the transmitter. In order to keep the spectral re-growth within tolerable limits, the signal must be pre-distorted before entering the power-amplifier. This is costly, as it requires wide-band analog hardware, typically several times wider than the channel bandwidth.

*Exposure to Electromagnetic Radiation*

Since transmit beamforming concentrates the signal energy within a confined spatial area, limits on electromagnetic compatibility are more likely to be reached for the same total radiated power, see for example [7]. This puts more strict constraints on the total permissible radiated power and the overall link budget.

*Reduced Diversity*

Multipath propagation provides diversity. In fading conditions, diversity can be required to control signal outage. Forming a narrow beam reduces the number of independent propagation paths significantly. Often only strongly correlated propagation paths remain that do not allow for beneficial multi-path diversity despite having a wide-band signal. To utilize signal paths with significantly different directions of propagation, multiple beams have to be formed. This compromises the overall beamforming gain twice, at both transmitter and receiver. The combining of these paths at the receiver, however, brings back the lost beamforming gain only once, not twice.

Transmit beamforming is a spatial repetition code. On each antenna, the same data is transmitted. If there are $N$ antennas, the code rate is $\dfrac{1}{N}$. A coherent superposition at the receiver improves the signal-to-noise ratio (SNR) by a factor of $N$. In the time domain, data symbols are conveniently separated by orthogonality via pulse shaping.

Information theory does not care, if we exchange space and time on an additive white Gaussian noise (AWGN) channel. It just means to give the variables in the mathematical model of the channel another physical meaning. However, the implementation may be more beneficial, if we apply the repetition code in time rather than in space.

Let all data be repeated $T$ times. The rate of this temporal repetition code is $\dfrac{1}{T}$. The coherent superposition within the receiver improves the SNR by a factor of $T$. In the spatial domain, data symbols can be conveniently separated by orthogonality via frequency multiplex, if each subcarrier is transmitted over a different antenna.

A multi-carrier multi-antenna system with temporal repetition coding that maps every subcarrier one to one onto the antenna elements is straightforward to implement with standard linear modulations. However, this leaves much room for improvement. Linear modulation with pulse shaping also comes with one quite unfavorable issue: The amplitude varies in continuous time. The signal crest requires the amplifiers to be backed-off to avoid non-linear signal distortion and out-of-band radiation (see [6]). A significant amount of energy is converted into heat rather than being radiated. Amplifiers which can cope with amplitude variations are also more expensive than their counterparts that can only cope with phase changes.

Nevertheless, linear modulation has displaced their nonlinear counterparts like continuous phase modulation and frequency shift keying over the evolution of wireless standard from 1G to 5G. This was, as frequency shift keying comes with its own severe issues: (1) The spectrum is poorly confined. (2) The amplitude domain is not utilized for data transmission. Both effects result in poor spectral efficiency.

In a multi-carrier system with low-rate repetition coding, the negative issues of frequency shift keying, if properly designed, vanish, while the crest problems of linear modulation remain. This makes continuous-phase frequency shift keying (CPFSK) a promising candidate for communication in millimeter and terahertz bands.

Embodiments of the present invention provide a proper multi-carrier design of CPFSK, which is termed herein also as Multi-Antenna Towards Inband Shift Keying (MA-TISK).

For low-rate repetition coding, it is not an issue to leave the amplitude dimension of the signal unused and utilize the phase only. After all, a repetition code only utilizes one out of many dimensions in signal-space. On the AWGN channel, restricting to phase modulation has a very similar effect as a repetition code of rate one half, if the SNR is high. For low SNR, i.e. for critical link budget, the effect vanishes.

In order to exonerate CPFSK, at least for critical link budgets, it is sufficient to overcome its poor spectral confinement. Embodiments of the present invention provide approaches for achieving this.

Let's consider a radio transmitter with N antenna elements. Let x be a $1 \times Q$-vector of data symbols to be transmitted. Let Q be an integer multiple of N for sake of simplicity of notation. Thus, one can write x = [$\mathbf{x}_0, \ldots , \mathbf{x}_{B-1}$] with B = Q/N and $\mathbf{x}_b \in \mathbb{C}^{1 \times N}$.

*Transmit Beamforming*

For transmit beamforming, the signal at data block $b \in \{0, \ldots, B - 1\}$ is given as

$$\mathbf{T}_b^{BF} = \boldsymbol{\phi}\mathbf{x}_b \qquad (1)$$

with $\boldsymbol{\phi} \in \mathbb{C}^{N\times 1}$ containing the phase shifts at the various antennas. The $N \times N$ space-time transmit matrix $\mathbf{T}_b^{BF}$ has rank one. Rows and columns indicate space and time, respectively. Despite its $N^2$ entries, this matrix only contains N data symbols. Therefore, coherent combining of $N^2$ entries at the receiver to a total of only N data symbols can result in an N-fold improvement of received signal power. That is commonly done by adjusting the phases in the vector $\phi$ such that the signals of all antennas coherently superimpose at the receive antenna.

Denoting the propagation channels of the N antenna elements towards the receiver as $\mathbf{h} \in \mathbb{C}^{1\times N}$, the received signal becomes

$$\mathbf{h}\mathbf{T}_b^{BF} = \mathbf{h}\boldsymbol{\phi}\mathbf{x}_b. \qquad (2)$$

The well-known theory of matched filters implies that $\phi = \mathbf{h}^\dagger$ (complex conjugate transpose of $\mathbf{h}$) is an optimal choice. If $\phi$ shall only contain phases, but not amplitudes, the optimum can only be approximated, in general.

For some matrix $\mathbf{F}_b \in \mathbb{C}^{T\times T}$ to be specified, one can alternatively allow for a more general $N \times T$ transmit matrix

$$\mathbf{T}_b = \mathrm{diag}(\mathbf{x}_b)\mathbf{F}_b \qquad (3)$$

with diag($\cdot$) denoting an $N \times T$ diagonal matrix with the components of its argument as diagonal entries. This transmit matrix contains TN entries, but only N data symbols. Under mild conditions on the matrix $\mathbf{F}_b$, it allows for a coherent superposition of the TN transmit signals onto N data symbols that results in a T-fold improvement of received power. For T = N, the same combining gain as with transmit beamforming is achieved.

The received signal is given by

$$\mathbf{h}\mathbf{T}_b = \sum_{n=0}^{N-1} h_n x_{b,n} \mathbf{f}_{b,n} \qquad (4)$$

with $h_n$, $x_{b,n}$, and $\mathbf{f}_{b,n}$ denoting the $n^{th}$ component of $\mathbf{h}$, the $n^{th}$ component of $\mathbf{x}_b$, and the $n^{th}$ row of $\mathbf{F}_b$, respectively. If the matrix $\mathbf{F}_b$ is unitary, the data symbols $x_{b,n}$ can be recovered without crosstalk by the matched filters $\mathbf{f}_{b,n}^\dagger$ that provide the T-fold improvement of SINR.

While there are plenty of matrices $\mathbf{F}_b$ that allow for coherent combining, there is a particular one, which provides invaluable advantages with respect to hardware cost and power consumption. That matrix is close to the discrete Fourier transform. Before getting to that particular matrix, consider the exact discrete Fourier transform, first. This means the transmit signal is a kind of orthogonal frequency-division multiplexing (OFDM) where each subcarrier is served by a different antenna.

For data symbols $x_{b,n}$ on the complex unit circle, i.e. any phase-shift keying modulation, the signal at any antenna has constant envelope in discrete time. This carries over to constant envelope in continuous time, if D/A-conversion is performed by phase-modulation of a voltage-controlled oscillator. This can be well approximated in discrete-time simulation by oversampling. By contrast, utilizing pulse shaping leads to amplitude fluctuations in continuous time.

Let

$$\mathbf{t}_n = [x_{0,n}\mathbf{f}_{0,n}, \ldots, x_{B-1,n}\mathbf{f}_{B-1,n}] \qquad (5)$$

be the transmit signal at antenna number n. If all data symbols were identical, this signal is a complex sinusoid and thus a single tone in the spectral domain. Due to modulation with the data symbols, phase jumps occur when data symbols change. These phase jumps lead to spectral regrowth that is unacceptable for most applications.

Phase jumps can be avoided while preserving constant envelope in continuous time. Note that for any regular PSK constellation A there are only as many possible phase jumps as there are constellation points. If we allow the discrete waveform $\mathbf{f}_{b,n}$ to depend on the data symbols of blocks b - 1, b, and b + 1, phase jumps can be avoided. Of course, this means that the subcarrier waveform $\mathbf{f}_{b,n}$ no longer is exactly a complex sinusoid. However, one can keep it as a complex sinusoid most of the time.

Let $\mathbf{f}_{b,n}^{(S)} \in \mathbb{C}^{1 \times ST}$ be a version of $\mathbf{f}_{b,n}$ oversampled by factor S and appropriately interpolated. For most of the time, it shall be a complex sinusoid, i.e.

$$\mathbf{f}_{b,n}^{(S)} = \left[ f_{b,n,0}^{(S)}, \ldots, f_{b,n,s}^{(S)}, \ldots, f_{b,n,ST-1}^{(S)} \right] \tag{6}$$

with

$$f_{b,n,s}^{(S)} = \begin{cases} \exp\left(2\pi j \frac{sn}{SN}\right) & L_s \leq s < ST - L_e \\ q_{n,s,d} & \text{else} \end{cases} \tag{7}$$

for some values $L_s$ and $L_e$ with $L = L_s + L_e < ST$, $d \in \{1, \ldots, |A|^2\}$, and some sequences $q_{n,s,d}$ to be optimized. There are various ways to find good sequences $q_{n,s,d}$. For instance, a least-squares optimization may be used in such a way as to minimize the aggregated out-of-band radiation, then, normalize the least-squares solution to unit modulus.

Data-dependent pulse waveforms are proposed for quasi-linear direct-sequence spread-spectrum modulation with constant envelope in [8] and [9] and successfully utilized in [10] for satellite communications with a tight spectral mask that asks for a stopband attenuation of -70 dB.

For demodulation, [8], [9] propose to correlate the received signal with the subcarrier waveforms averaged over all possible transitions of data symbols. During the period $L_s \leq s < ST - L_e$, these subcarrier waveforms are all identical, thus, there is no need for averaging. During the time frames $0 \leq s < L_s$ and $ST - L_e \leq s < ST$ the average is given by

$$\frac{1}{|A|^2} \sum_{d=1}^{|A|^2} q_{n,s,d}. \tag{8}$$

Such a correlator maximizes the received signal power, but ignores effects of interference between subcarriers. Discarding the signal during the transition phase and simply demodulate the data during the period $L_s \leq s < ST - L_e$ can lead to better performance. Furthermore, this can easily be implemented by means of fast Fourier transform. Performance can also be improved by means of linear, see for example [11], or nonlinear, see for example [12], multiuser detection.

Thus, while it dominates conventional approaches, transmit beamforming comes with the above-described inconveniences.

It is noted that the information in the above section is only for enhancing the understanding of the background of the invention and, therefore, it may contain information that does not form prior art that is already known to a person of ordinary skill in the art.

**Summary of the Invention**

It is an object of the present invention to provide an improved approach for transmitting a data signal in a wireless communication network using a plurality of antennas while avoiding beamforming and its associated inconveniences.

This object is achieved by a method according to claim 1, by a transmitter according to claim 10, and by a wireless communication system according to claim 13.

The present invention provides a method for transmitting a data signal over a plurality of carriers of a radio channel, the radio channel having a channel bandwidth comprising the plurality of carriers, and the data signal comprising a plurality of data symbols, the method comprising:

adjusting a phase of a carrier signal of each carrier transmitting a data symbol for modulating a data symbol on a carrier, and
transmitting each carrier over a separate antenna,
wherein the phase of the carrier signal of one carrier, which transmits a data symbol at the highest frequency in the channel bandwidth, is adjusted such that any instantaneous frequency of the carrier signal deviates towards the center frequency of the channel bandwidth, and

wherein the phase of the carrier signal of another carrier, which transmits a data symbol at the lowest frequency in the channel bandwidth, is adjusted such that any instantaneous frequency of the carrier signal deviates towards the center of the channel bandwidth.

In accordance with embodiments, the channel bandwidth comprising the plurality of carriers has a lower frequency and an upper frequency, which is higher than the lower frequency, the highest frequency, at which the one carrier transmits the data symbol, is the upper frequency or is lower than the upper frequency, and the lowest frequency, at which the other carrier transmits the data symbol, is the lower frequency or is higher than the lower frequency.

In accordance with embodiments, the phase of the carrier signals of one or more further carriers, which transmit a data symbol at a frequency between the highest frequency and the lowest frequency, is adjusted such that any instantaneous frequency of the respective carrier signals deviates towards the center of the channel bandwidth.

In accordance with embodiments, adjusting the phase of the carrier signal comprises selecting a phase shift to be applied to the carrier signal from one of a plurality of sets of phase shifts, wherein the set to be applied depends on the frequency of the carrier.

In accordance with embodiments, the set of phase shifts to be used for a carrier is selected dependent on a distance of the carrier from a center frequency of the channel bandwidth.

In accordance with embodiments, the phase of the carrier signal is adjusted for one or more of the following:

- a Binary Phase Shift Keying, BPSK, modulation of the data symbol,
- a Quaternary Phase Shift Keying, QPSK, modulation of the data symbol,
- an 8PSK modulation of the data symbol,
- a 16PSK modulation of the data symbol,
- a modulation where the timing of the pulse encodes the data symbol, e.g., a pulse-position modulation.

In accordance with embodiments, the method further comprises receiving the transmitted data signal, wherein receiving the transmitted data signal comprises:

band-limiting the received data signal,
analog-to-digital converting the received data signal, and
sampling the analog-to-digital converted data signal for obtaining the data symbols.

In accordance with embodiments, receiving the transmitted data signal further comprises performing beamforming towards a transmitter transmitting the data signal.

In accordance with embodiments, the method further comprises

multiplying the received data signal using a windowing function, e.g., a rectangular windowing function, and
performing a Fast Fourier Transformation, FFT, for separating the carriers.

The present invention provides a transmitter for transmitting a data signal over a plurality of carriers of a radio channel, the radio channel having a channel bandwidth comprising the plurality of carriers, and the data signal comprising a plurality of data symbols, the transmitter comprising:

a plurality of antennas, each of the plurality of antennas being configured to transmit one of the plurality of carriers, wherein each of the antennas is equipped with a radio frequency, RF, circuit,
wherein the RF circuit is configured to control phase of a carrier signal for modulating a data symbol onto the carrier, wherein the RF circuit is configured to adjust

- the phase of the carrier signal of one carrier, which transmits a data symbol at the highest frequency in the channel bandwidth, such that any instantaneous frequency of the carrier signal deviates towards the center of the channel bandwidth, and
- the phase of the carrier signal of another carrier, which transmits a data symbol at lowest frequency in the channel bandwidth, such that any instantaneous frequency of the carrier signal deviates towards the center of the channel bandwidth.

In accordance with embodiments, the RF circuit comprises a voltage controlled oscillator, VCO, e.g., a Switched Injection Locked Oscillator, SILO, or a VCO with a phase locked loop, PLL.

In accordance with embodiments, the RF circuit comprises

- one or more digital-to-analog converters, D/A-converters, receiving the data signal and controlling a phase adjustment or phase shift of the carrier signal, or
- a circuit for applying the data symbols, e.g., in the form of a pulse, like a smoothed rectangular voltage pulse or a squared sine wave pulse, thereby directly providing a voltage corresponding to a desired phase adjustment.

The present invention provides a wireless communication system, comprising a transmitter in accordance with embodiments of the present invention, and a receiver for receiving the data signal transmitted by the transmitter, wherein the receiver comprises:

- one or more antennas, and
- a signal processor for band-limiting the received data signal, analog-to-digital converting the received data signal, and sampling the analog-to-digital converted data signal for obtaining the data symbols.

In accordance with embodiments, the receiver comprises a plurality of antennas, and the signal processor is configured to perform beamforming towards the transmitter.
In accordance with embodiments, the wireless communication system comprises:

a 3rd Generation Partnership Project, 3GPP, system comprising one or more user devices, UEs, including the transmitter and/or the receiver, and one or more base stations, BSs, including the transmitter and/or the receiver, or
a system operating at millimeter wavelengths, mmWaves, in the millimeter band, or
a system operating in the terahertz band, or
a satellite-based communication system.

According to the present invention the above-discussed problems in conventional approaches may be avoided by implementing an approach for transmitting a data signal such that a phase adjustment of a carrier signal of a carrier for modulating a data symbol on the carrier avoids or reduces a radiation outside a bandwidth of the radio channel over which the data signal is transmitted. In other words, the inventive approach aims at avoiding or reducing out-of-band radiation which is caused by a deviation of the instantaneous frequency of the carrier due to the phase adjustment of the carrier signal for modulating the data symbol onto the carrier. More specifically, in accordance with the present invention, at least the phases of the carrier signals of those carriers which are for transmitting data symbols in the highest/lowest frequency of the channel bandwidth are adjusted in such a way that any instantaneous frequency of the carrier signal no longer deviates into a direction towards the borders of the channel bandwidth, rather, the adjustment is such that the deviation of any instantaneous frequency of the respective carriers is towards the center of the channel bandwidth. For example, when considering that a first data symbol, like a "0", is modulated by increasing a phase of the carrier signal, e.g., by $+\frac{\pi}{2}$, and that a second data symbol, like a "1", is modulated by decreasing a phase of the carrier signal, e.g., by $-\frac{\pi}{2}$, conventionally this leads to an increase of the instantaneous frequency towards higher frequencies for data symbol "0", or to a decrease of the instantaneous frequency towards lower frequencies for data symbol "1". At the border of the channel bandwidth or frequency band, this may lead to mentioned out-of-band radiation. For avoiding or reducing this, in accordance with the present invention, the adjustment or phase shift is selected for each data symbol such that the deviation of the instantaneous frequency associated with the data symbol deviates towards the center of the channel bandwidth, i.e., any instantaneous frequency (for each data symbol) deviates towards the center of the channel bandwidth. For example, when considering a carrier at or close to the upper frequency of the frequency band, rather than increasing a phase, e.g., by $+\frac{\pi}{2}$, for a certain data symbol, a phase shift of, e.g., by $-\frac{3\pi}{2}$, is caused, which does not change the transmitted data symbol as phases are indifferent with respect to shifts of $2\pi$ but causes the instantaneous frequency associated with the data symbol to deviate towards the center of the channel bandwidth. This approach avoids or reduces the undesired out-of-band radiation which is, without our invention, due to a phase adjustment causing the instantaneous frequency of a carrier signal in the upper most or lower most frequency of the frequency band or channel bandwidth to be shifted towards or even beyond the upper/lower frequency of the frequency band, thereby avoiding or reducing interferences with signals outside the frequency band.
The present invention is based on the inventor's following findings:

- The conventional frequency modulation approach, which traditionally tries keep the frequency deviation at the minimum level in order to reduce out-of-band radiation, is not well-suited for multi-carrier systems with frequency modulation per carrier.

- In multi-carrier systems, the direction of the frequency deviation is more important than its amplitude.

Based on these findings the conventional frequency modulation approach is replaced by an asymmetric continuous-phase frequency modulation directed towards the in-band.

Due to the fact that the amplitude is of secondary importance for the spectral shape, the inventive approach does not need to stay with GSM's binary modulation format. Similar to standard linear modulation, the size of the signal constellation can be increased without much adverse effects onto the spectral shape. As a result, linear modulation has lost its decisive advantage over frequency modulation - an advantage that, so far, has kept it winning over frequency modulation despite its amplitude variations that are a severe issue for the cost and power-efficiency of RF-hardware. Without this decisive advantage, linear modulation has lost much of its benefits. Frequency modulation becomes the better choice.

Further, frequency deviations towards the in-band create significant spectral overlap between subcarriers. This causes severe intercarrier interference. Although this interference does not hurt much from an information-theoretic point of view, its mitigation may be prohibitively complex for the high data rates of modern wireless standards. In a communication system with critical link-budget, however, the overall code rate (including the spatial or temporal repetition coding by transmit beamforming or its alternatives) is very low. This means the system has a high tolerance against such interference and the inventive approach is advantages for such a setting.

Embodiments of the present invention provide an approach, which is also referred to as Multi-Antenna (MA) Towards Inband Shift Keying (TISK), for transmitting a data signal in a wireless communication network having many advantages compared to spatial beamforming at a transmitter. The inventive approach copes with critical link budgets, and, in contrast to conventional approaches that rely on analog, digital, or hybrid beamforming at both transmitter and receiver, MA-TISK does not require beam alignment. The transmitted signals have all constant envelope in continuous time. This results in an efficient, low-cost power amplification and does not require D/A-converters. The inventive approach is compatible with any linear PSK-modulation as well as pulse position modulation.

The inventive approach is advantageous as MA-TISK does not suffer or suffers at least less from the above-described spectral re-growth issues plaguing other constant envelope modulations, like GMSK. Almost rectangular signal spectra similar to those for linear modulation with root-raised-cosine pulse shaping are possible. For example, for a 100 MHz-wide spectral mask of 5G downlink, QPSK-modulation allows for 160 MBit/s with 5.74 MHz subcarrier spacing when using 16 transmit antennas, and when applying the inventive approach, this wide carrier spacing makes the signals insensitive to Doppler effects. Further, there is no loss in link budget gain compared to spatial beamforming at the transmitter.

In accordance with embodiments, a multi-carrier signal, e.g., an OFDM-like signal, is provided and each carrier is sent over a separate antenna that is equipped with a voltage-controlled oscillator. The phases of these oscillators are controlled by the digital baseband for modulating data symbols onto the carriers, and the phases are further controlled for reducing or avoiding out-of-band radiations. At a receiver a temporal signal combining makes up for the lack of beamforming gain at the transmitter. A common message may be broadcast to many receivers, simultaneously. Demodulation can be efficiently implemented by means of fast Fourier transform. Such embodiments of the present invention provide various advantages:

- Due to a space-time transmit signal matrix with full rank, coherent combining can be performed at any receiver side, irrespective of location. This avoids the need for beamforming at the transmitter and makes beam alignment obsolete.
- Phase shifts may be induced by steering voltage-controlled oscillators. This avoids insertion losses that occur, when a common power amplifier drives multiple antennas.
- Each of N antenna elements operates only at about $(1/N)^{th}$ of the channel bandwidth. So does the corresponding power oscillator, the cables, and connectors. Narrowband RF hardware is generally less costly than wideband equipment.
- The transmit signals have perfect constant envelope. This allows power-efficient and cost-effective RF hardware. This is possible despite the limitations of Heisenberg's time-frequency uncertainty, as the frequency-constraint is not per antenna, but only for the aggregate spectrum of all antennas.
- The signal is radiated omnidirectionally in space. There are no areas with critical electromagnetic compatibility, as coherent signal combining only occurs within the receiver.
- Diversity is fully exploited in both space, time, and frequency. Although the signals at individual antennas are narrowband, forward-error correction coding can span over the data symbols of multiple antennas. Thus, frequency diversity can be fully exploited. Temporal and spatial diversity is fully exploited as the transmit signal is sent omnidirectionally, allowing for multi-path propagation without angular restrictions.
- The transmitter does not require explicit D/A-converters. It can directly feed the data symbols into the VCO.
- The transmit signal is inherently cyclo-stationary. This simplifies synchronization and reduces signaling overhead.
- Peak data rate can be made to grow linearly with SNR by means of spatial multiplexing even in far fields scenarios, since omni-directional transmission does not prevent rich scattering.

**Brief Description of the Drawings**

Embodiments of the present invention are now described in further detail with reference to the accompanying drawings:

Fig. 1　　　　is a flow diagram of a method for transmitting a data signal in accordance with embodiments of the present invention,

Fig. 2(A)-(B)　illustrate embodiments of the inventive concept with reference to a data signal that is to be transmitted using two carriers of a radio channel wherein each carrier is used for carrying one or more data symbols,

Fig. 3(A)　　　illustrates an embodiment of a transmitter in accordance with the present invention,

Fig. 3(B)　　　illustrates a further embodiment of a transmitter in accordance with the present invention,

Fig. 4　　　　illustrates an embodiment of a wireless communication system including a transmitter in accordance with embodiments of the present invention,

Fig. 5　　　　illustrates an embodiment of a receiver of the wireless communication system of Fig. 4 including a plurality of antennas used for beamforming,

Fig. 6　　　　illustrates instantaneous frequencies of 16 subcarriers over 2 symbol periods when using rectangular pulses with RC-lowpass filtering in accordance with embodiments of the present invention,

Fig. 7　　　　illustrates the four possible symbol transitions ①-④ for the uppermost subcarrier in Fig. 6 and the temporal average of them (line ⑤),

Fig. 8　　　　illustrates an average power spectral density, PSD, of the transmit signal according to Fig. 6,

Fig. 9　　　　illustrates real parts of the 16 average matched filters for rectangular pulses and RC-lowpass filtering at 50 MHz,

Fig. 10　　　illustrates real parts of the smoothly windowed FFT-based receive filters for rectangular pulses and RC-lowpass filtering at 50 MHz,

Fig. 11　　　illustrates a distribution of the interference after receive filtering,

Fig. 12　　　illustrates instantaneous frequencies of 16 subcarriers over 2 symbol periods when using squared sine wave pulses with RC-lowpass filtering in accordance with embodiments of the present invention,

Fig. 13　　　illustrates an average power spectral density, PSD, of the transmit signal according to Fig. 12,

Fig. 14　　　illustrates an average power spectral density, PSD, of the transmit signal in accordance with another embodiment, and

Fig. 15　　　illustrates a short-term spectrum of GSM during the synchronization burst which contains 148 consecutive 0-bits.

**Description of Embodiments**

Embodiments of the present invention are now described in more detail with reference to the accompanying drawings, in which the same or similar elements have the same reference signs assigned.

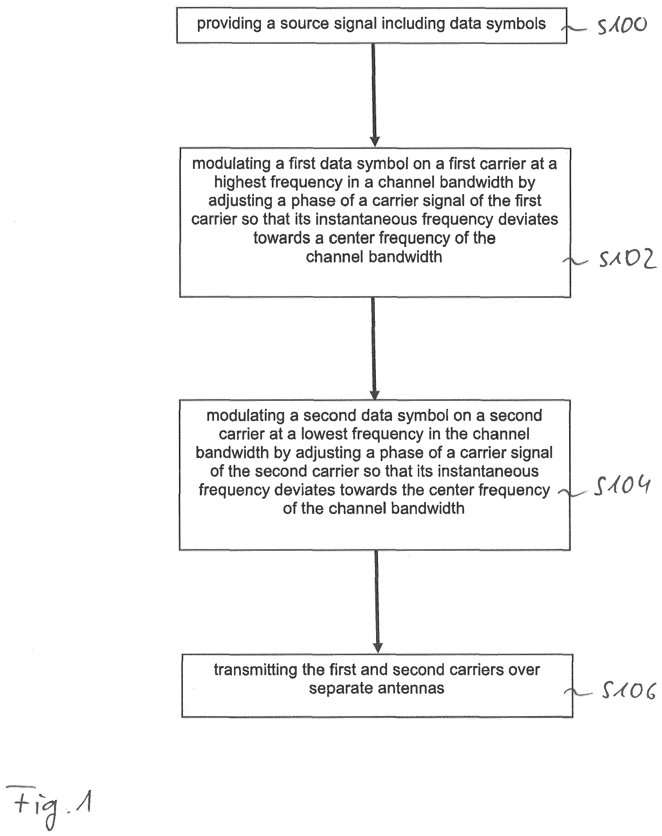

Fig. 1 is a flow diagram of a method for transmitting a data signal in accordance with embodiments of the present invention. As is indicated at S100, initially, a source signal, like a data signal, which includes the data symbols to be transmitted, is provided to a transmitter. The data symbols are to be modulated onto respective carriers of a radio channel used for the transmission of the data signal. The data signal is transmitted over a plurality of carriers of the radio channel which has a channel bandwidth or frequency band in which the plurality of carriers are located. Once the source data signal is available, data symbols are modulated onto some or all of the carriers or subcarriers. It is noted that when referring to carriers also subcarriers are meant and vice versa. As is indicated at S102, a first data symbol is modulated on a first carrier which transmits at a highest frequency in the frequency band or channel width. The modulation is by adjusting a phase of a carrier signal of the first carrier such that any instantaneous frequency of the carrier signal deviates towards a center of the frequency band or channel bandwidth. As is indicated at S104, a second data symbol is modulated on a second carrier. The second carrier transmits a data symbol at a lowest frequency in the channel bandwidth, and the data symbol is modulated by adjusting the phase of the carrier signal of the second carrier so that any instantaneous frequency of the carrier signal deviates towards a center of the channel bandwidth. Following the modulation, the first and second carriers are transmitted over separate antennas, as is indicated at S106.

Thus, in accordance with the inventive approach, at least the outer most frequencies of the frequency band of the radio signal used for transmitting data symbols of the data signal are modulated such that their instantaneous frequencies deviate no longer towards the borders of the frequency band or channel bandwidth but to the center of the frequency band. Thereby, undesired out-of-band radiations causing interferences with other data transmissions outside the channel bandwidth are avoided. Since the carriers which transmit data symbols on the highest/lowest frequencies within the frequency band or bandwidth are most likely to cause the undesired out-of-band radiations, in general, performing the modulation in the above-described way is sufficient for at least reducing the undesired out-of-band radiations.

However, the present invention is not limited to such embodiments, rather, in accordance with other embodiments, also the modulation of other carriers operating at frequencies between the highest/lowest frequencies carrying a data symbol and the center of the band may be modulated with the data symbol such that the phase adjustment for the modulation is performed so that instantaneous frequencies of the respective carrier signals deviate (at least predominantly) towards the center of the frequency band.

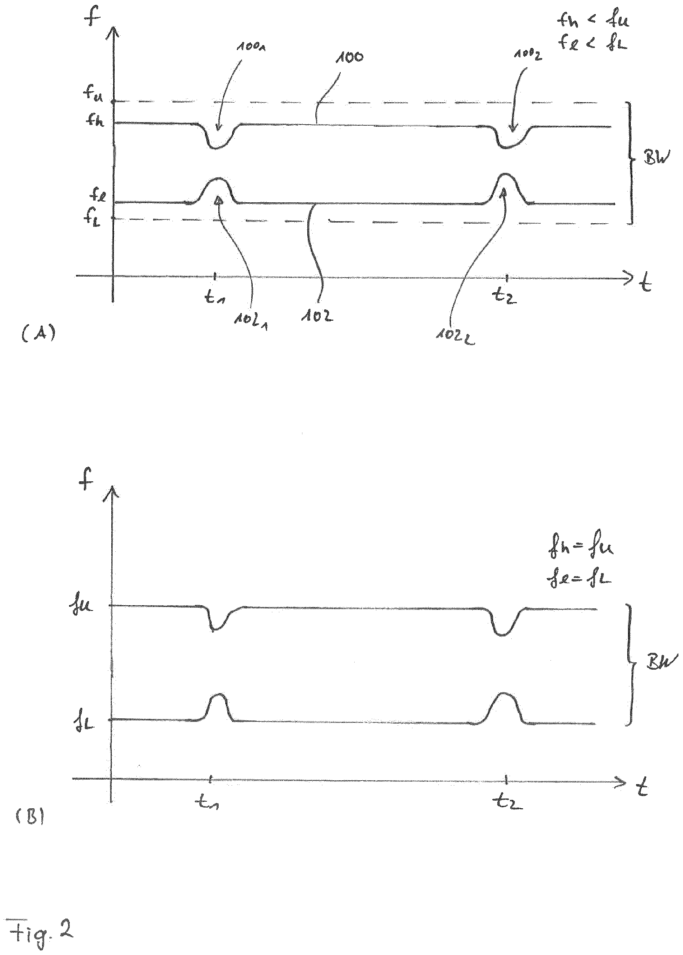

Fig. 2(A) and Fig. 2(B) illustrate embodiments of the inventive concept with reference to a data signal that is to be transmitted using two carriers of a radio channel wherein each carrier is used for carrying one or more data symbols. The horizontal axes are associated with the time domain while the vertical axes are associated with the frequency domain. Fig. 2(A) illustrates a radio channel having a certain frequency band or channel bandwidth BW. The frequency band/channel bandwidth has an upper frequency $f_U$ and a lower frequency $f_L$. The radio channel includes a plurality of carriers and in the depicted embodiment it is assumed that the data signal uses only two of the carriers for transmitting respective data symbols of the data signal.

Fig. 2(A) illustrates a first carrier 100 which is the carrier at the highest frequency within the bandwidth BW which actually transmits a data symbol. As mentioned above, the radio channel may have a plurality of carriers so that there may also be carriers between the carrier 100 and the upper frequency $f_U$, however, it is assumed that such carriers do not carry any data symbols. Likewise, the second carrier 102, is assumed to be the carrier having the lowest frequency in the BW on which a data symbol is transmitted. There may also be further carriers between the frequencies $f_L$ and $f_l$, however it is assumed that these carriers do not carry any data symbols. Further it is assumed that there are no further carriers used for carrying data symbols between the frequencies $f_h$ and $f_l$. Fig. 2(A) illustrates two symbol periods, and the beginnings of the periods are indicated at times $t_1$ and $t_2$. At this time, the data symbol to be carried over the respective carriers is modulated onto the carriers 100, 102 by adjusting a phase of the carrier signal of each carrier 100, 102. As is illustrated in Fig. 2(A), the phase adjustment is carried out in such a way that the instantaneous frequencies of the carrier signals 100, 102 deviate at times $t_1$ and $t_2$ towards the center of the frequency band, as is indicated in Fig. 2(A) at $100_1$, $100_2$, $102_1$ and $102_2$.

Thus, in the embodiment of Fig. 2(A), the highest frequency $f_h$ at which a data symbol of the data signal is carried using the first carrier 100 is less than the upper frequency $f_U$ of the frequency band or channel bandwidth BW of the radio channel. Likewise, the lowest frequency $f_l$ at which a data symbol of the data signal is transmitted using the second carrier 102 is greater than the lower frequency $f_L$ of the frequency band or a bandwidth BW of the radio channel.

In accordance with other embodiments, the highest frequency at which a data symbol is transmitted may be the upper frequency $f_U$ of the radio channel, and the lowest frequency on which a data symbol of a data signal is transmitted may be the lower frequency $f_L$ of the radio channel, as is illustrated in Fig. 2(B).

It is noted that in accordance with further embodiments, the highest frequency at which a data symbol of the data signal is transmitted may be the upper frequency $f_U$ while the lowest frequency at which a data symbol is transmitted may be a frequency above the lower frequency $f_L$. Vice versa, also the highest frequency at which a data symbol is transmitted may be below the upper frequency $F_U$ while the lowest frequency at which a data symbol is transmitted may be the lower frequency $F_L$.

Moreover, as mentioned above, more than the two carriers 100, 102 illustrated in Fig. 2(A) and Fig. 2(B) may be used for transmitting data symbols of the data signal. Such carriers may be located at respective frequencies between frequencies $f_h$ and $f_l$. In accordance with embodiments, for modulating the data symbols on such further carriers operating at frequencies between frequency $f_h$ and $f_l$, the phases of the respective carrier signals may be adjusted in a way as described above, namely such that the instantaneous frequencies at the times of modulating the data symbol onto the respective carrier deviate towards the center of the radio channel or frequency band. In accordance with yet other embodiments, not all of the intermediate carriers operating between the frequencies $f_h$ and $f_l$ may be subjected to the inventive way of phase modulating the data symbol onto the carrier. For example, dependent on a distance of the carrier from the upper or lower frequencies $f_U$, $f_L$, of the frequency band or bandwidth BW of the radio channel, the inventive phase adjustment may only be applied when the distance is below a certain threshold so that, for example, carriers within a certain frequency range around the center of the frequency band are not phase modulated in accordance with the inventive approach.

Embodiments of the present invention provide a transmitter for transmitting a data signal over a plurality of carriers of a radio channel. The data signal includes a plurality of data symbols. The radio channel has channel bandwidth comprising the plurality of carriers. The transmitter includes a plurality of antennas. Each of the plurality of antennas transmits one of the plurality of carriers. Each of the antennas is equipped with a radio frequency, RF, circuit. The RF circuit controls a phase of a carrier signal for modulating a data symbol onto the carrier. The RF circuit adjusts the phase of the carrier signal of one carrier, which transmits a data symbol at the highest frequency in the channel bandwidth, such that any instantaneous frequency of the carrier signal deviates towards the center of the channel bandwidth, and the phase of the carrier signal of another carrier, which transmits a data symbol at lowest frequency in the channel bandwidth, such that any instantaneous frequency of the carrier signal deviates towards the center of the channel bandwidth.

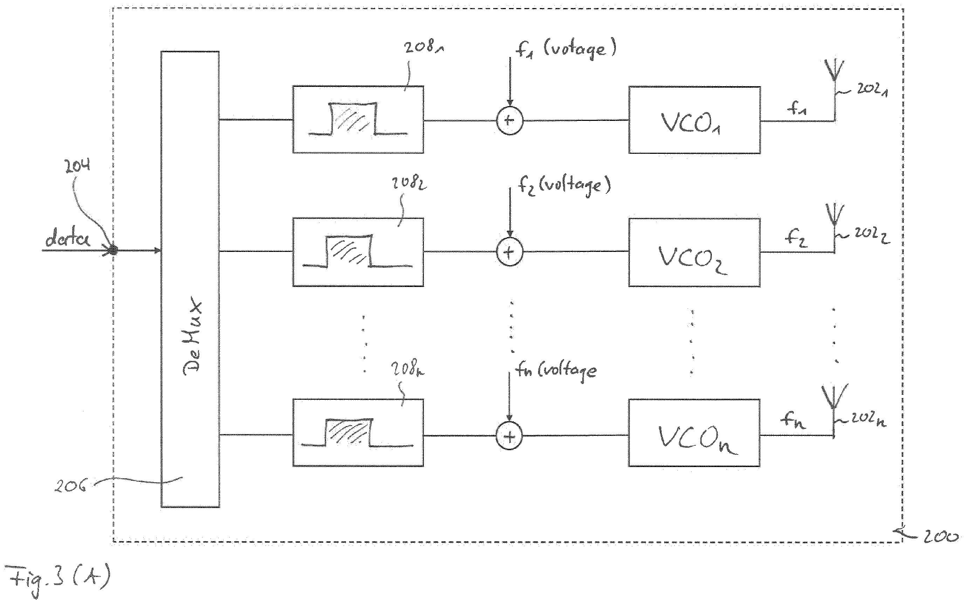

Fig. 3(A) illustrates an embodiment of a transmitter in accordance with the present invention. The transmitter 200 comprises a plurality of antennas $202_1$ to $202_n$, an input 204, a demultiplexer 206 and a plurality of RF circuits or chains. Each RF circuit is connected to one of the antennas $202_1$ to 202, and to the demultiplexer 206. The data signal is to be transmitted over respective carriers transmitted at respective frequencies $f_1$ to $f_n$ using the respective antennas $202_1$ to $202_n$. Thus, each of the antennas $202_1$ to $202_n$ is equipped with an RF chain. The source data at the input 204 is input into a demultiplexer 206 which distributes the respective data symbols in the data signal to the respective RF chains. Each of the RF chain includes a voltage controlled oscillator $VCO_1$ to $VCO_n$, like a switched injection locked oscillator, SILO, or a VCO with a phase locked loop, PLL. The VCOs provide, responsive to an input voltage $f_{1(voltage)}$ to $f_{n(voltage)}$, the respective carrier signals at the frequencies $f_1$ to $f_n$. Further, each of the RF chain include a circuit $208_1$, $208_2$, ... $208_n$ for applying the data symbols to be transmitted using the respective carriers. In accordance with embodiments, the circuit $208_1$, $208_2$, ... $208_n$ may include a digital-to-analog converter, D/A converter. The circuit $208_1$, $208_2$, ... $208_n$ applies a data symbol in the form of a pulse, like a smoothed rectangular voltage pulse or a squared sine wave pulse, with the area under the pulse (see the hatched areas in Fig. 3(A)) determining a phase shift of the VCO. Stated differently, injecting into the VCO a voltage detunes the VCO from the frequency defined by the respective input voltage $f_{1(voltage)}$ to $f_{n(voltage)}$ which causes a desired phase adjustment or phase change so that any instantaneous frequency of the carrier signal of a first carrier, which transmits a data symbol at a highest frequency $f_1$ and any instantaneous frequency of the carrier signal of a second carrier, which transmits a data symbol at a lowest frequency $f_n$, is adjusted towards a center in the channel bandwidth, as has been described above with reference to Fig. 2(A) and Fig. 2(B).

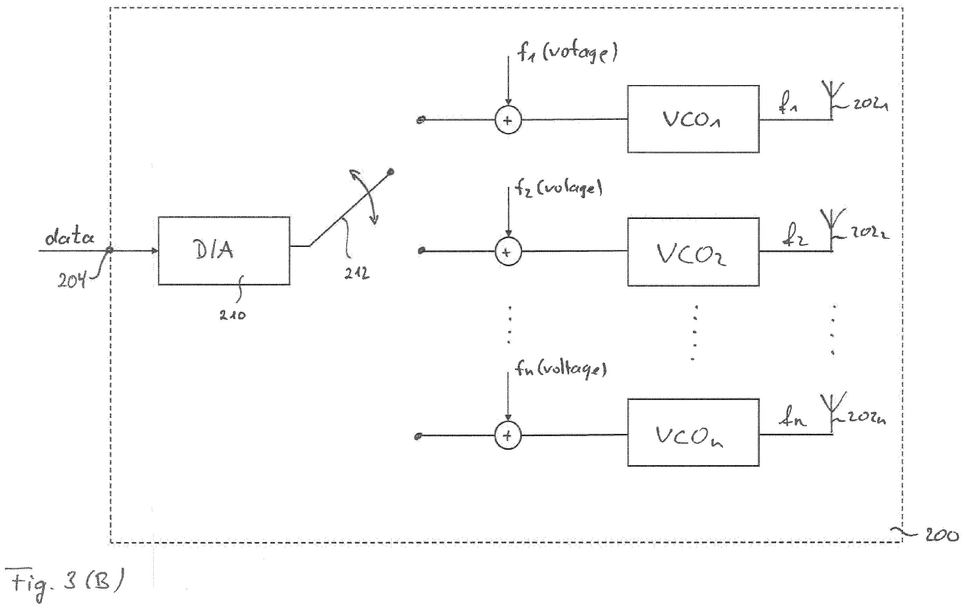

In accordance with further embodiments, some or all of the VCOs may share a D/A-converter, for example in situations in which the data symbols on all of the carriers or on all carriers within a group of carriers are modulated at different times. Fig. 3(B) illustrates a further embodiment of a transmitter in accordance with the present invention, in which the RF chains share one D/A converter 210 so that no demultiplexer is needed. The D/A converter 210 is selectively connected to the VCOs using a switch element 212. The analog output voltage obtained by D/A converting the data signal is injected into a VCO and detunes the VCO from the frequency defined by the respective an input voltage $f_{1(voltage)}$ to $f_{n(voltage)}$ which causes a desired phase adjustment or phase change so that any instantaneous frequency of the carrier signal of a first carrier, which transmits a data symbol at a highest frequency $f_1$ and any instantaneous frequency of the carrier signal of a second carrier, which transmits a data symbol at a lowest frequency $f_n$, is adjusted towards a center in the channel bandwidth, as has been described above with reference to Fig. 2(A) and Fig. 2(B).

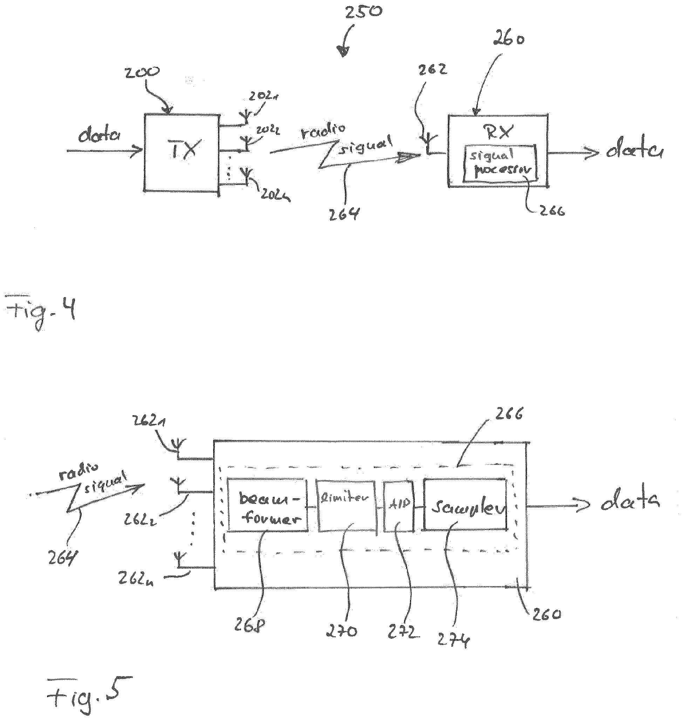

Fig. 4 illustrates an embodiment of a wireless communication system 250 including a transmitter 200 in accordance with embodiments of the present invention. The system 250 further comprises a receiver 260 including at least one antenna 262 for receiving a radio signal 264 transmitted via the plurality of antennas $202_1$ to $202_n$ of the transmitter 200. The receiver 260 includes a signal processor 266 for processing the radio signal 264 received via the antenna 262 for obtaining the data transmitted by the transmitter 200. In accordance with embodiments, the receiver 260 uses the signal processor for band-limiting the received data signal, analog-to-digital converting the received signal and sampling the converted data signal for obtaining the respective data symbols of the data signal.

In accordance with further embodiments, the receiver may include a plurality of antennas and perform beamforming for creating a receive beam for receiving the radio signal 264 from the plurality of antennas of the transmitter 200. Fig. 5 illustrates an embodiment of the receiver 260 including a plurality of antennas $262_1$ to $262_n$. In the depicted embodiment, the signal processor 266 includes a beamformer 268 for forming a receive beam using a plurality of the antenna elements $262_1$ to $262_n$ which is directed towards the receiver 200 for receiving the radio signal 264 transmitted via the multiple antennas by the receiver 200. The signal processor 266 further comprises a band limiter 270 for limiting the received radio signal and an A/D-converter 272 for converting the analog radio signal into the digital domain where it is sampled by a sampler 274 for obtaining the data symbols which are eventually output as the data signal by the signal processing.

Thus, embodiments of the present invention introduce the above-described modulation technique, also referred to as Multi-Antenna Towards Inband Shift Keying, MA-TISK, which allows for implementing data dependent subcarrier waveforms cost-effectively and power-efficiently in hardware for both transmitter and receiver.

In the following, further details of the transmitter and the receiver described above are given, followed by a presentation of numerical results illustrating the operation and advantageous effect of the inventive approach.

*Transmitter*

A cost-effective and power-efficient implementation at the transmitter, like the one described above with reference to Fig. 3(A) avoids pre-distortion units, D/A-converters, and linear amplifiers.

Power Amplifier

During a sinusoidal phase, i.e. $L_s \leq s < SN - L_e$, no phase adjustment is needed, not even a mixer or upconverter. Therefore, according to embodiments, $VCO_1$, $VOC_2$, ... VCO, which are used for phase adjustment are implemented as high-power oscillators. Such oscillators can be built in class F and can reach high efficiencies. For the period of a single symbol, typically spanning less than a microsecond, they may even not need phase control, but run freely. Only at symbol transitions, they need external steering to adjust the phase in a controlled manner in order to modulate the correct data symbol and to avoid spectral regrowth. In accordance with embodiments, such oscillators may comprise Switched Injection Locked Oscillators, SILOs, as described, e.g., in [13]. In accordance with other embodiments, a conventional voltage controlled oscillator, VCO, with a phase-locked loop, PLL, may be used.

VCOs are not only cost-effective and energy-efficient, they also reduce the effort of D/A conversion. A VCO converts a feeding voltage into the frequency of an oscillator by a linear mapping. As frequency is the temporal derivative of the phase, the VCO is fed with the phase derivative, also known as the instantaneous frequency. Thus, it integrates the input signal. This integration has the following beneficial effects:

- The integration has a low-pass characteristic. It smooths phase transitions and reduces spectral regrowth.
- The integration can be interpreted as the summation part of a $\Sigma$-$\Delta$ D/A-converter. Thus, with sufficient time resolution, only very few discrete levels are needed for the feeding voltage.

Phase Transitions

While there are various ways to implement phase transitions at the transmitter, in accordance with embodiments, for creating a favorable spectral shape, a phase is not rotated symmetrically.

A phase shift is a temporary change of the instantaneous frequency towards either lower or higher values. As the instantaneous frequency is the temporal derivative of the phase, the phase shift is the integral of the temporary deviation of the instantaneous frequency from the subcarrier frequency over the duration of the phase transition. A temporarily higher or lower instantaneous frequency results in a positive or negative phase shift, respectively. Phase shifts by $+\pi/2$ are usually implemented by raising the instantaneous frequency, phase shifts by $-\pi/2$ by lowering it. This way, the frequency deviation is kept as low as possible and spectral regrowth minimized.

With multiple subcarriers one direction of frequency deviation affects the overall spectral regrowth more than the other. Positive and negative frequency deviations predominantly create spectral regrowth at higher and lower frequencies, respectively. Consider, e.g., the rightmost or uppermost subcarrier in a frequency band. A frequency deviation towards higher frequencies creates out-of-band radiation. A frequency deviation towards lower frequencies, however, only creates interference to adjacent subcarriers. For the leftmost or lowermost subcarrier, this consideration holds vice versa. Subcarriers further away from the upper and lower end are somewhat less affected by this asymmetry. Still this consideration may also be relevant for them.

When implementing a phase shift of $+\dfrac{\pi}{2}$ at the rightmost or uppermost subcarrier, in accordance with embodiments, the instantaneous frequency is not raised, but lowered three times as much as for $-\dfrac{\pi}{2}$. This results in a phase shift of $-\dfrac{3\pi}{2}$ which does not change the transmitted data symbol as phases are indifferent with respect to shifts of $2\pi$. The overall spectral regrowth is even larger than for raising the instantaneous frequency. However, most of that regrowth appears in-band, i.e., within the frequency band of the radio channel, where it does not contribute to out-of-band radiation. Similar considerations hold for phase shifts other than $\pm\dfrac{\pi}{2}$. For subcarriers left of or below the center of the frequency band, these considerations hold vice versa.

In accordance with embodiments, a Quaternary Phase Shift Keying, QPSK, modulation is used. For a QPSK constellation, this means that there are some subcarriers which use phase shifts from $\left\{0, -\dfrac{\pi}{2}, -\pi, -\dfrac{3\pi}{2}\right\}$, some subcarriers which use phase shifts from $\left\{+\dfrac{\pi}{2}, 0, -\dfrac{\pi}{2}, -\pi\right\}$, some subcarriers which use phase shifts from $\left\{+\pi, +\dfrac{\pi}{2}, 0, -\dfrac{\pi}{2}\right\}$, and some subcarriers which use phase shifts from $\left\{+\dfrac{3\pi}{2}, +\pi, +\dfrac{\pi}{2}, 0\right\}$. The set that is used depends on the frequency of the subcarrier. It may even be helpful to utilize shifted QPSK constellations for some or all subcarriers that are rotated by a certain angle that depends on the subcarrier index and that is not a multiple of $\dfrac{\pi}{2}$.

The considerations above were exemplified for QPSK. However, they also hold for other PSK constellations. They also apply to pulse position modulation based on phase shifts. As has been show above, some phase-shifts are more costly in terms of overall spectral shape and inter-carrier interference than others so that shaping the probabilities of the various phase shifts towards a non-uniform distribution are beneficial.

Round-Robin D/A-Conversion

One way to generate arbitrary phase transitions is to use D/A-converters to steer the VCOs. In accordance with embodiments, the number of D/A-converters can be reduced significantly, if symbols transitions at the various antennas are not aligned in time. If transitions occur one after the other, the same D/A-converter can serve multiple antennas in a round-robin fashion, as has been described with reference to Fig. 3(B). If ST ≥ LN, a single D/A-converter can serve all antennas.

Direct Phase Injection

In accordance with other embodiments, the four voltages corresponding to the four phases of the QPSK constellation are directly injected into the VCO, as described with reference to Fig. 3(C). The rectangular voltages can be smoothed by an analog low-pass filter, like an RC-low-pass of first order. This reduces spectral sidelobes at the expense of increased crosstalk between subcarriers. It also serves as a simple model for the limited bandwidths of the cables feeding the VCOs.

In accordance with further embodiments, out-of-band radiation can be further reduced by using one period of a squared sine wave instead of a rectangular voltage pulse to feed the VCO. Such a sine wave can be generated easily in analog circuitry without the need for D/A-conversion.

*Receiver*

Although the transmitter dominates the overall cost, also the receiver to be as cost-effective as possible. In according with embodiments, this is achieved by a receiver employing beamforming, like analog beamforming, towards the transmitter. The combined signal of all antennas is bandlimited to filter adjacent channel signals and noise, fed into an A/D-converter, and sampled.

Average Matched Filter

Average matched filters, i.e., filters matched to the average pulse waveforms, see equation (8), are not recommended. Although they are useful in code-multiplex with random waveforms, see for example [8], [9], they lead to severe degradation if partially orthogonal pulse waveforms are used. The average matched filter only aims to maximize the power of the targeted subcarrier. It ignores the presence of intercarrier interference which can be severe during the phase transitions.

FFT-Based Receiver

In accordance with embodiments, the receiver is a FFT-based receiver, which is simpler to implement and even outperforms an average matched filter. It multiplies the received signal with a windowing function. Then, it performs an FFT to separate the subcarriers. The FFT-based receiver can even be used to simplify the bandlimiting filter in front of the sampling unit. It is sufficient to limit the received signal to twice the channel bandwidth, if sampling twice as fast, and use an FFT of double length.

In accordance with embodiments, a rectangular windowing may be applied. This windowing nulls the received signal during the phase transitions and performs an FFT of what remains. This is most effective, if the transition period is strictly constrained in time and the duration of the remaining period is ST - L = SN, and N is a power of two. In this case, the pulse shapes with nulled phase transitions are both orthogonal and match the FFT, see equation (7), up to a deterministic factor that arises from some temporal shift. This factor can be easily compensated for.

In accordance with other embodiments, a smoothing window may be applied. This is a more general approach that allows for optimization of the window. For a design parameter $\alpha$ to be optimized, a heuristic choice for the window is the envelope of the average matched filter raised to the power $\alpha$.

Multipath Propagation

In general, the delay spread of propagation is rather small for systems with critical link budgets, see for example [14], significantly below 1 $\mu$s and the smaller the larger the carrier frequency. This is because the attenuation by objects is rather high in the millimeter and THz-bands, due to strong absorption by many materials. Furthermore, stringent receiver beamforming only allows for a narrow angular spread of the received signal.

In some cases, multipath propagation might be intended, e.g. if diversity reception is required in order to reduce the outage probability. In this case, two or more beams may be formed. This comes at the expense of multiple receiver chains of analog combining, A/D-conversion and FFT.

Even for three or more separable propagation paths, two receiver chains are sufficient to equalize the resulting intersymbol interference. These two receive chains span twice as many dimensions in signal space. This allows to implement frequency domain equalization of intersymbol interference, see for example [15], with only little noise enhancement similar to the reverse link of the 4G standard, , see for example [16], [17]. These methods can be implemented at moderate complexity, see for example [18].

*Numerical Results*

In the following, examples of numerical results are described demonstrating the quantitative potential of the inventive concept. In all examples, a direct phase injection is used.

Spectral Mask of 5G Downlink

The spectral mask of 5G downlink at 100 MHz channel bandwidth is considered. A transmit array with N = 16 antennas and a QPSK modulation at a symbol rate of 5 Msymbols/s on each subcarrier, which results in a total data rate of 160 Mbit/s, is chosen. The corresponding symbol period is 200 ns. In order to cope with the spectral mask, T = 18.375. This results in a subcarrier spacing of 5.74 MHz. This is, by far, wide enough to be insensitive to Doppler-induced frequency shifts.

Rectangular Pulse Shape

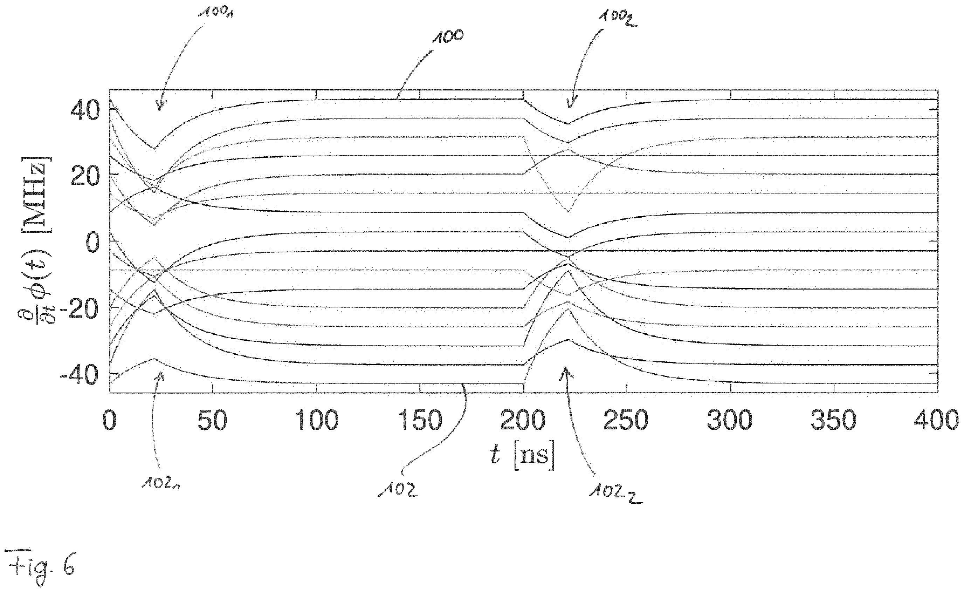

In accordance with embodiments, a rectangular pulse of duration 21.8 ns and a first order RC-lowpass filter with cut-off frequency 50 MHz is used, and the resulting instantaneous frequencies are shown in Fig. 6 for two symbol periods and all 16 subcarriers, including the uppermost and lowermost carriers 100 and 102 in the frequency band which transmit data symbols. The inventive phase modulation at the beginning of the respective symbol periods, which causes the deviation of the frequency towards the center of the frequency band is shown at $100_1$, $100_2$, $102_1$, $102_2$.

The instantaneous frequencies change over time, but they always keep between the lowest and highest subcarrier frequency. Changes are predominantly directed towards the center of the frequency band. The RC-lowpass filter distorts the rectangular pulses to an almost triangular shape and the transition period extends significantly beyond the duration of the pulse.

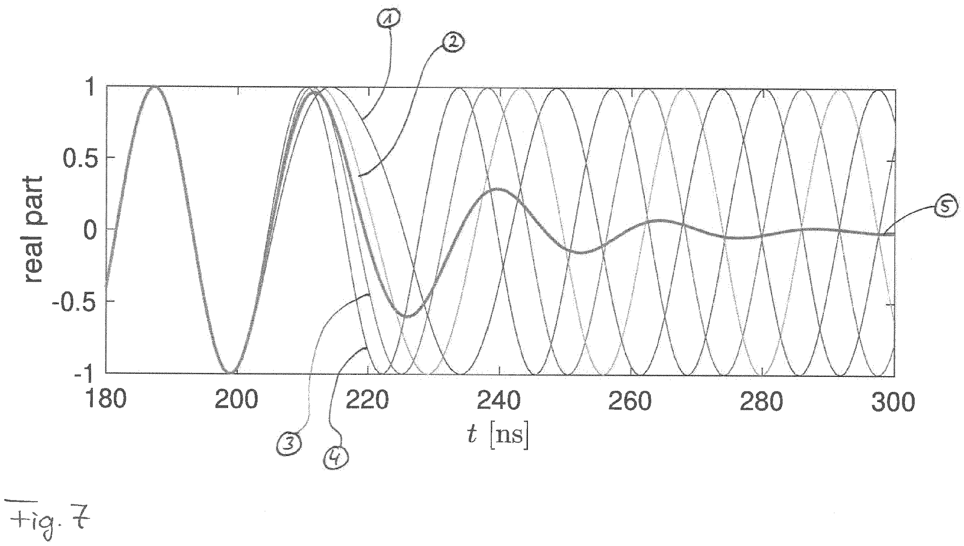

The four possible symbol transitions ①, ②, ③, ④ for modulating four different phases onto the uppermost subcarrier 100 in Fig. 6 are shown in Fig. 7 and compared to its average ⑤. As may be seen, the transition starts at t = 200 ns. The phase is changed by temporarily lowering the frequency.

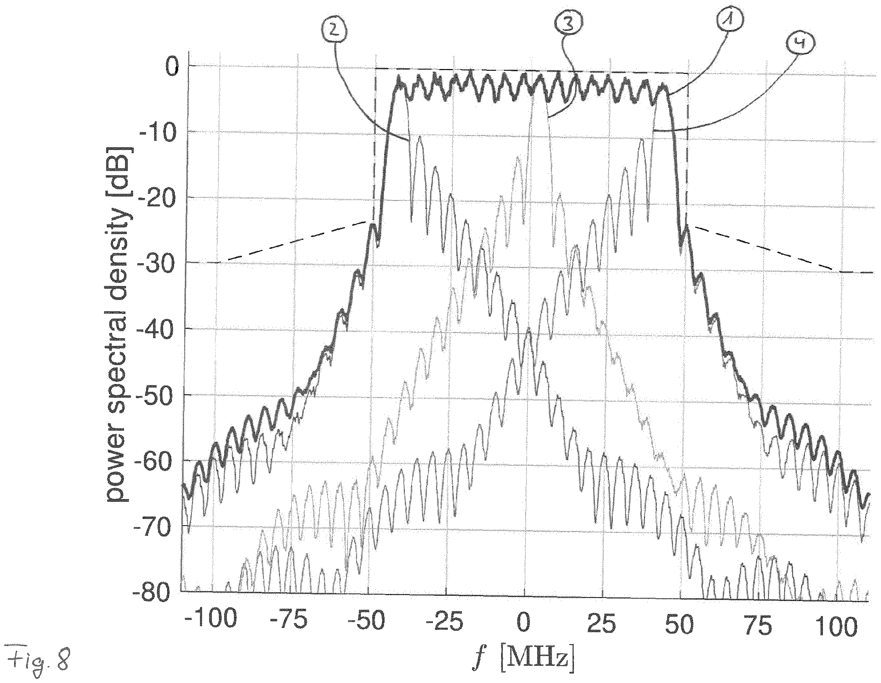

The average power spectral density (PSD) of the transmit signal is shown in Fig. 8. The PSD of the transmit signal vs. the spectral mask of 5G is illustrated. The line ① shows the average spectrum. The lines ②, ③ and ④ refer to the spectra of the leftmost (lowest), a center, and the rightmost (highest) subcarrier, respectively. While the aggregate signal is wideband, the transmit signal of any individual antenna element is narrowband. This simplifies the design of the RF-circuitry. The asymmetry of the PSD at the leftmost and rightmost subcarriers is evident. Even the spectrum of the centered carrier is not symmetric, as it performs phase shifts by $-\pi$, but not by $+\pi$. The overall spectrum shows significantly less sidelobes than the spectra of the individual subcarriers. This is a direct result of the inventive in-band direction of the frequency deviations.

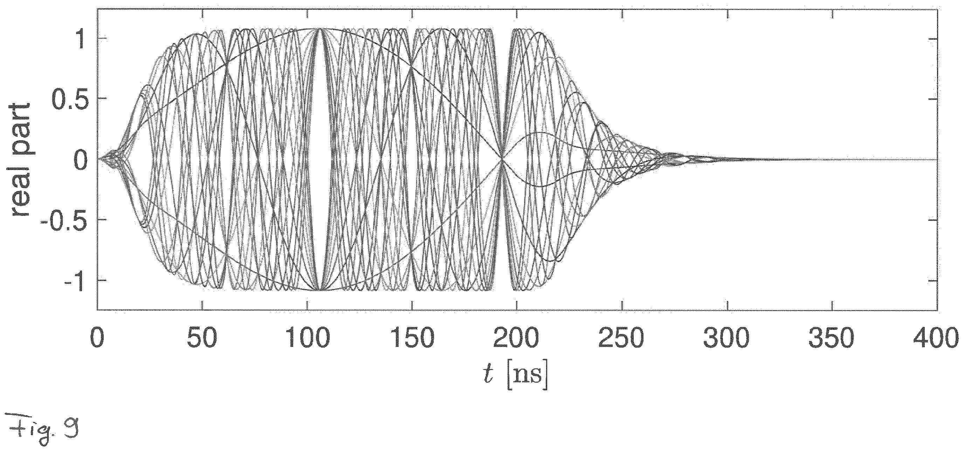

The real parts of the 16 average matched filters are depicted in Fig. 9. The real parts of the average matched filters for rectangular pulses and RC-lowpass filtering at 50 MHz are shown. The envelope of the matched filters reflects the asymmetry of the rectangular pulse after distortion by the lowpass filter.

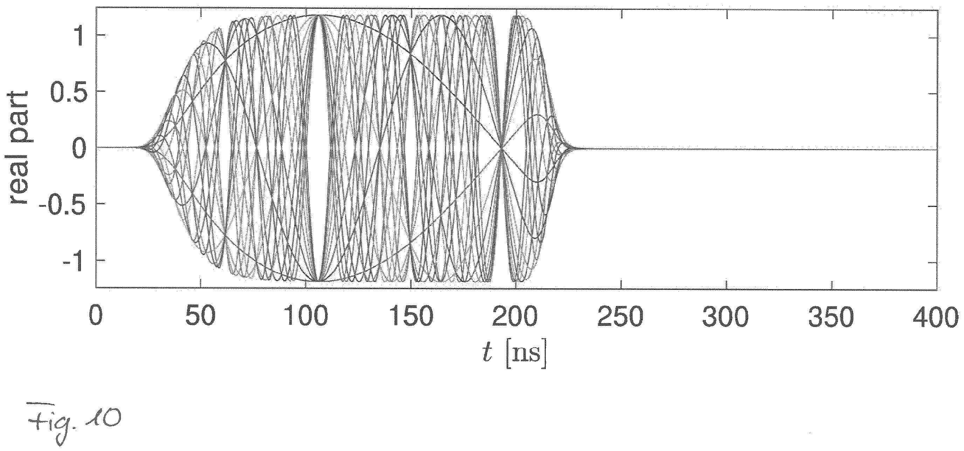

The real parts of the 16 smoothly windowed FFT-based receive filters are depicted in Fig. 10. 4. The real parts of the FFT-based receive filters for rectangular pulses and RC-lowpass filtering at 50 MHz are illustrated with an average matched filter window with exponent $\alpha$ = 8. The windowing exponent significantly reduces the length of the window. The signal-to-interference ratio, SIR, is found as 9.7 dB and 18.3 dB for the average matched filter and the FFT-based receive filter, respectively. No Gaussian noise was added. Interference is solely due to crosstalk of subcarriers and intersymbol interference.

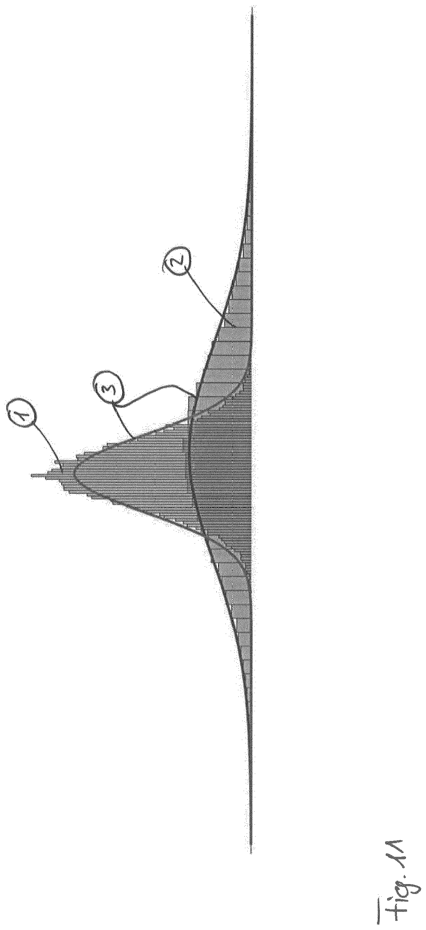

The distribution of the interference is depicted in Fig. 11 and is found close to Gaussian. The distribution of the interference after receive filtering shown with the distributions ① and ② referring to average matched filtering and FFT-based receiver filtering, respectively. The Gaussian distributions of same mean and variance are shown for comparison at ③.

The temporal combining gains of the two receive filters are 12.6 dB and 12.2 dB, respectively. The FFT-based receive filter has a slightly lower combining gain, as it windows the received signal more sharply. This compares favorably to the 12.0 dB combining gain of transmit beamforming with 16 antennas. Note that the temporal combining gain can exceed 12 dB as T = 18.375 > N = 16.

Squared Sine Wave Pulse Shape

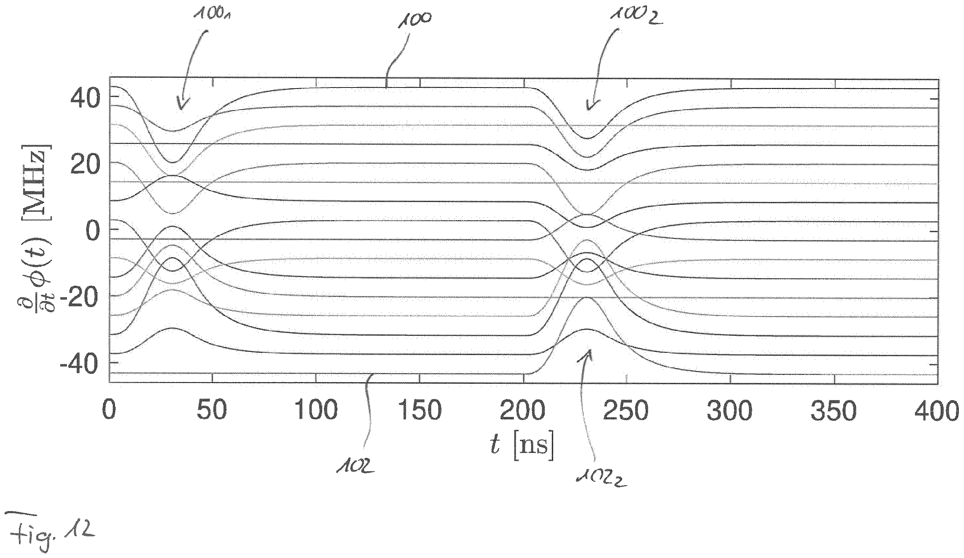

In accordance with further embodiments, a squared sine wave pulse within $[0; \pi]$ of duration 43.5 ns and a first order RC-lowpass filter with cut-off frequency 70 MHz is used, and the resulting instantaneous frequencies are shown in Fig. 12 for two symbol periods and all 16 subcarriers, including the uppermost and lowermost carriers 100 and 102 in the frequency band which transmit data symbols. The inventive phase modulation at the beginning of the respective symbol periods, which causes the deviation of the frequency towards the frequency of the frequency band is shown at $100_1$, $100_2$, $102_1$, $102_2$.

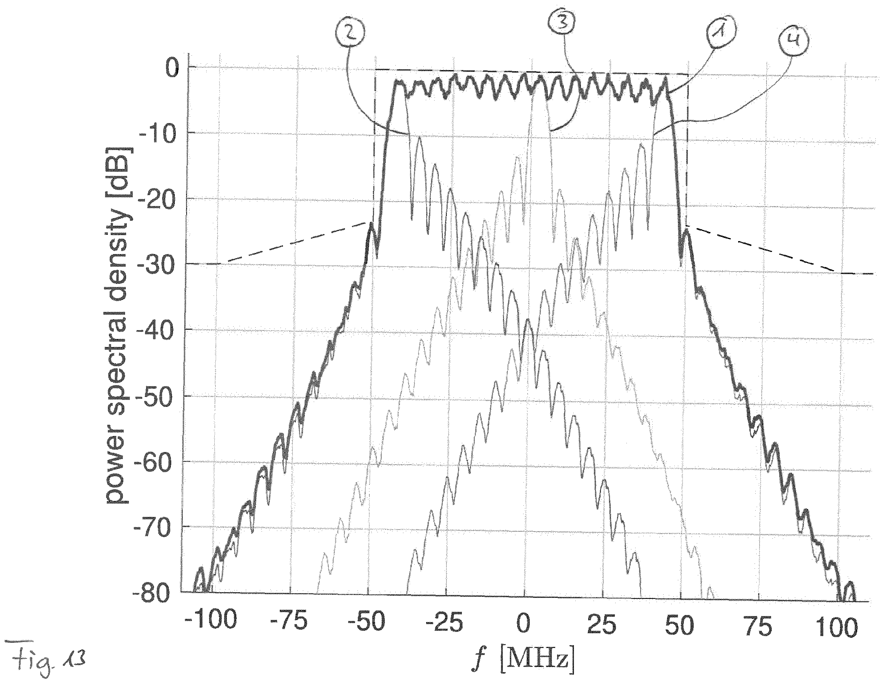

The RC-lowpass filter causes a minor distortion of the squared sine wave pulse, and the average power spectral density PSD of the transmit signal is shown in Fig. 13. The PSD of the transmit signal vs. the spectral mask of 5G is illustrated. The line ① shows the average spectrum. The lines ②, ③ and ④ refer to the spectra of the leftmost, a center, and the rightmost subcarrier, respectively. As my be seen, above -50 dB, the PSD is hardly affected by the change of pulse waveform. Below that, spectral regrowth is suppressed much better. For windowing exponent $\alpha$ = 15, the signal-to-interference-and-noise-ratio, SINR, is found as 9.7 dB and 20.9 dB for the average matched filter and the FFT-based receive filter, respectively. The temporal combining gains of the two receive filters are 12.5 dB and 12.1 dB, respectively.

In accordance with other embodiments, a pulse shaping as in Gaussian minimum shift keying, GMSK, may be used. These pulses are convolutions of rectangular and Gaussian pulses any yield similar results as when using the squared sine-wave pulses.

The spectral mask of 5G is quite loose. In accordance with embodiments, more sharply defined spectrum may be used. Again, a 100 MHz channel bandwidth is targeted. A transmit array with N = 32 antennas and QPSK modulation at a symbol rate of 2 Msymbols/s on each subcarrier, which results in a total data rate of 128 Mbit/s, is chosen. This corresponds to a symbol period of 500 ns. The reduced data rate allows for a longer transition period. This results in greatly reduced out-of-band radiation. T = 46, which results in a subcarrier spacing of 2.88 MHz. A squared sine wave pulse of duration 152 ns and set the cut-off frequency of the RC-lowpass at 70 MHz is used.

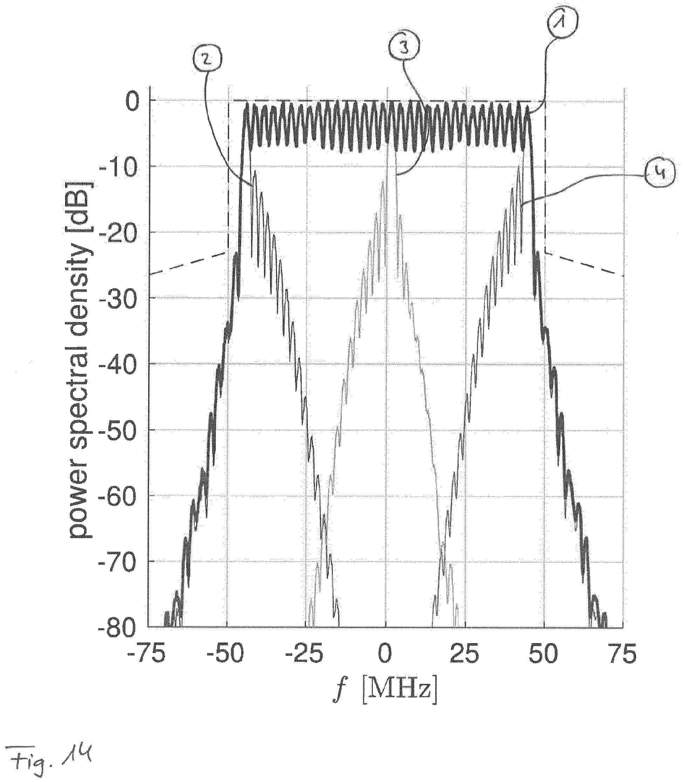

For such a wide pulse, the lowpass filter hardly distorts the pulse shape. Therefore, an FFT-based receiver with rectangular windowing is used. This achieves an SIR of 43 dB. The combining gain is 15 dB, exactly the same as for transmit beamforming. The average power spectral density, PSD, of the transmit signal is shown in Fig. 14. The PSD of the transmit signal vs. the spectral mask of 5G is illustrated. The line ① shows the average spectrum. The lines ②, ③ and ④ refer to the spectra of the leftmost, a center, and the rightmost subcarrier, respectively. At 70 MHz, i.e., 40% above the edge of the channel band, the PSD has already decayed to -80 dB. This improvement is paid for with the reduced data rate compared to the previous examples. Also, the intercarrier interference is greatly reduced.

*Relation to Repetition-Coded GMSK*

The data rate R is fundamentally related to signal-to-noise ratio, SNR. For the complex-valued additive white Gaussian noise channel with power constraint, the relation is well-investigated and given by

$$R = \log_2(1 + \text{SNR}) \qquad\qquad (9)$$

If the link budget is critical, SNR is low, that means SNR « 1. in that case, the logarithm in equation (9) is well approximated by a linear function.

$$R \approx \frac{\text{SNR}}{\ln 2}. \qquad\qquad (10)$$

In that regime, standard methods of forward-error correction coding designed for moderate rates with repetition coding are combined in order to get an overall very low rate. If the link-budget is not critical, transmit beamforming is inefficient. If $SNR \lll 1$, the linear approximation by equation (10) does not hold. In that case, the rate is a severely sublinear function of SNR. Multiple antennas are better suited to boost the rate than to boost the SNR. Spatial multiplexing beats beamforming. The larger the SNR, the greater the spread between the two.

Transmit beamforming realizes the repetition code spatially. It transmits the same data symbol simultaneously on all antennas. On the other hand, in accordance with the present invention, MA-TISK implements the repetition code in time. From an information-theoretic point of view, both approaches are equivalent. From an implementation perspective, however, they are very different.

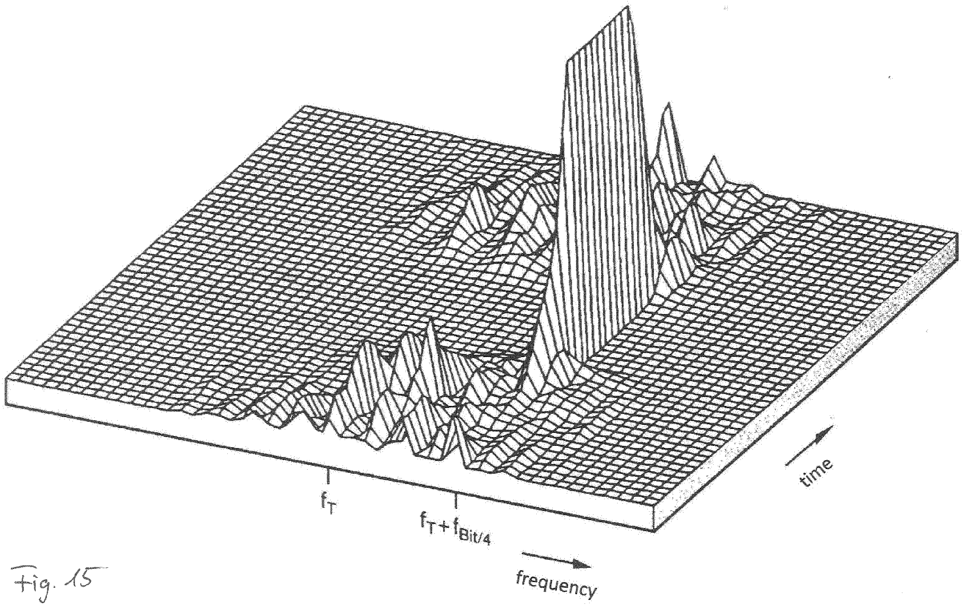

Let's consider repetition coding modulated with Gaussian minimum shift keying, GMSK, as used in the 2G Global System for Mobile Communications, GSM, and a repetition code of rate $\frac{1}{T}$ with two codewords, the all-one and the all-zero word. If the all-zero codeword are fed into the frequency modulator, the phase is repeatedly shifted upwards. This is equivalent to an increase of frequency. This effect is well-known and even utilized in GSM. Fig. 15 shows the short-term spectrum of GSM during the synchronization burst which contains 148 consecutive 0-bits, see for example [19]. In the figure, $f_T$ denotes the carrier frequency. This temporary sine tone at the shifted frequency is used in GSM for coarse time synchronization.

For the all-one codeword, the short-term spectrum looks very similar. The frequency shift is not towards lower frequencies, but also upwards. This is as GSM uses differential precoding. Thus, a sequence of 148 1-bits is converted into a sequence of at least 147 0-symbols. For a duration of at least 142 symbols (GMSK modulation contains memory of up to 5 symbols), the instantaneous frequency is identical. However, the waveform is phase-shifted by $\pi$.

The signal during the GSM synchronization burst is like the signal transmitted in accordance with the present invention on an individual antenna. Let's consider the following mapping: A 0-bit is mapped onto the standard GSM synchronization burst and a 1-bit is mapped onto a GSM synchronization burst where the 0-bits are replaced with 1-bits. For comparison one of the subcarriers right of the center of the frequency band in MA-TISK is considered, and Gaussian pulse waveforms are used, as in GSMK. Let the subcarrier frequency be the upshifted temporary frequency during the synchronization burst. For binary phase-shift keying, there is the following mapping: a 0-bit corresponds to no phase shift, a 1-bit to a phase shift of -π, i.e., a temporary reduction of the instantaneous frequency for few symbols. Cleary, the transmit signals for the two cases match.

Fig. 15 clearly shows the spectrum tilting towards lower frequencies which is also observed in Fig 7, 12 and 13 for subcarriers right of the center. For subcarriers left of the center, all considerations hold vice versa, if the code is changed from {000 ... 0,111 ... 1} to {0101 ...1,1010 ...0} or if the sign of the Gaussian pulse waveform is flipped from +1 to -1.

In accordance with the inventive approach, the approximate independence of the quadrature components is utilized. In addition, there is hardly, if at all, any penalty by the larger frequency deviation. This is due to the asymmetric spectrum whose overall width is overwhelmingly determined by the number of subcarriers.

Reference is now made to conventional approaches against which the inventive approach is evaluated.

Constant Envelope OFDM

OFDM with constant envelope is proposed in [20]. However, this approach is entirely different from the inventive MA-TISK. First a standard OFDM signal is created by means of inverse Fourier transform, which is then fed into a frequency modulator. While such a system is shown to perform well in terms of error rates after demodulation, the out-of-band radiation is problematic.

A generalization of [20] is given in [21]. This reference allows for a more general signal transformation than the fast Fourier transform. However, the general concept to feed the transformed signal into a frequency modulator is kept untouched. The issue with spectral re-growth remains.

Constant envelope OFDM with multi-antenna transmitters is studied in [22]. However, the transmit signals are created and modulated in the same way as [20]. Then, they are distributed to the multiple antenna elements, in parallel.

Asymmetric Modulation

Asymmetric frequency shift keying is proposed in [23] for the purpose of reducing out-of-band radiation. However, other than in the present invention the information is not encoded in phase, but in frequency. This known design improves the spectral shape at the cost of power efficiency. This is counterproductive, especially if the link budget is critical.

Separation of Multiple Users

An advantage of the inventive approach is that MA-TISK is able to serve users at different angular locations with the same data, effortlessly. For serving users with user-specific data beam-steering reflect arrays described, e.g., in [24] may be used. Such an architecture uses a reflect antenna, currently also often termed reflecting intelligent surface, in the near-field of few active transmitters.

The near-field allows to separate users in both angle and distance. At first sight, it might appear that the angular separation is a feature that makes conventional transmit beamforming superior to the inventive approach, MA-TISK, in terms of spectral efficiency, in particular, if there are many users to serve. However, the conventional transmit beamforming system pays for serving K users with different data, instead of a single one, with a loss in beamforming gain by a factor of (at least) K, if the data rate per user stays fixed. The system may also pay by a factor of $K$ in data rate, if the beamforming gain stays fixed, e.g., serving the users in time multiplex. In a conventional transmit beamforming system there are simply (by a factor of K) fewer antennas available to form a beam towards an individual user. While the inventive approach does not separate users spatially, this is actually not needed as the antennas radiate in all directions. Therefore, subcarriers are split among the users. The K users are separated in frequency. As each antenna corresponds to one subcarrier, this is, in fact, also a split of antennas. In contrast to transmit beamforming, users do not suffer from a loss of combining gain, but they suffer from a loss in data rate by a factor of K. For a critical link-budget, however, a loss in data rate and a loss in beamforming gain are equivalent due to equation (10) further below. Data rate can be converted into link-budget and vice versa. This can be realized, e.g., by adapting the rate of the error correction code by a factor of K. The overall performance in terms of rate per user and link-budget is similar as in conventional systems, if the system parameters are properly designed.

Peak Data Rate

While average data rate is the most important performance figure of a wireless communication system, peak data rate also matters, not least for marketing a new system. There are two major ways to boost data rate, if the overall physical bandwidth (radio spectrum) is fixed: Higher order modulation and spatial multiplexing.

(1) Higher order modulation exploits high SNRs. For systems operating in critical link budgets, this happens rarely, but may occur, e.g., because only a single user is active or the distance between transmitter and receiver is small. However, higher order modulation converts a linear increase in SNR into a logarithmic increase in data rate, which is a bad deal.

(2) Spatial multiplexing exploits unused antenna elements. If the link budget is better than expected, not all transmit antennas are in need. Some of them can be used for spatial multiplexing. Spatial multiplexing converts a linear increase in the number of antennas into a linear increase in data rate. The problem with spatial multiplexing is twofold:

1. In order to work at all, either near-field communication or rich scattering is needed.
2. Sophisticated signal processing effort is required at either transmitter or receiver.

For transmit beamforming, spatial multiplexing is only an option in the near-field. Since narrow beams are formed at both transmitter and receiver, a rich scattering environment is very difficult to exploit. It does not only require beam alignment for the direct signal path, but also for all the additional propagation paths. The peak data rate of transmit beamforming is, thus, predominantly determined by the performance of higher order modulation. It is compromised by the inefficient conversion of surplus antennas into surplus SNR which results in only a logarithmic surplus of data rate. Contrary thereto, the inventive approach, MA-TISK, can convert a linear increase in link-budget into a linear increase in data rate. The concept is based on omni-directional radiation of signals. There is nothing that prevents rich scattering of the transmit signal. In accordance with embodiments, e.g., for the implementation of the system described above with reference to Fig. 4, the number of subcarriers and the duration between phase shifts is reduced to approximately half, a quarter, an eighth, etc. As a result, not all pulse waveforms are approximately orthogonal any longer. Pairs, quadruples, 8-tuples, etc. of them are close to identical. However, for any pair or quadruple, there are two or four receive antennas to match them. In rich scattering or near-field scenarios, a multiplexing gain can be realized. This leads to a linear increase in data rate.

Besides the linear increase of data rate by means of spatial multiplexing, the inventive MA-TISK also allows for a logarithmic increase via higher-order phase modulation. Furthermore, the phase modulation can be combined with pulse position modulation.

*General*

Embodiments of the present invention have been described in detail above, and the respective embodiments and aspects may be implemented individually or two or more of the embodiments or aspects may be implemented in combination.

Embodiments of the present invention have been described in detail above, which use a Quaternary Phase Shift Keying, QPSK, modulation of the data symbol. However, the present invention is not limited to such embodiments. In accordance with other embodiments, the data symbol may be modulated using

- a Binary Phase Shift Keying, BPSK, modulation, or
- an 8PSK modulation, or
- a 16PSK modulation, or
- a pulse position modulation.

In accordance with embodiments, the wireless communication system may be a 3GPP network. The wireless communication system may be a terrestrial network, or a non-terrestrial network, or segments of networks may use as a transceiver implementing the inventive transmitter an airborne vehicle or a space-borne vehicle, or a combination thereof. In accordance with embodiments of the present invention, the transmitter may be implemented in a user device and/or in a network entity of the wireless communication system.

In accordance with other embodiments, the wireless communication system may by a system or network different from the above described mentioned mobile communication systems, and the inventive approach may be implemented in any other wireless communication network, e.g., in a system operating at millimeter wavelengths, mmWaves, in the millimeter band, in a system operating in the terahertz band, or in a satellite communication network.

Although some aspects of the described concept have been described in the context of an apparatus, it is clear, that these aspects also represent a description of the corresponding method, where a block or a device corresponds to a method step or a feature of a method step. Analogously, aspects described in the context of a method step also represent a description of a corresponding block or item or feature of a corresponding apparatus.

The above-described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

**References**

[1] Marco Giordani, Marco Mezzavilla, and Michele Zorzi. Initial access in 5G mmwave cellular networks. IEEE Communications Magazine, 54(11):40-47, November 2016.

[2] Junil Choi, Vutha Va, Nuria Gonzalez-Prelcic, Robert Daniels, Chandra R. Bhat, and Robert W. Heath. Millimeter-wave vehicular communication to support massive automotive sensing. IEEE Communications Magazine, 54(12):160-167, December 2016.

[3] Chungshan Liu, Stephen V. Hanly, Philip Whiting, and Ian B. Collings. Millimeter-wave small cells: Base station discovery, beam alignment, and system design challenges. IEEE Wireless Communications, 25(4):40-46, August 2018.

[4] Vahid Jamali, Antonia M. Tulino, Georg Fischer, Ralf R. Müller, and Robert Schober. Intelligent surface-aided transmitter architectures for millimeter-wave ultra massive MIMO systems. IEEE Open Journal of the Communications Society, 2:144-167, January 2021.

[5] Sang-Hyun Park, Byoungnam Kim, Dong Ku Kim, Linglong Dai, Kit-Kai Wong, and Chan-Byoung Chae. Beam squint in ultrawideband mmwave systems: RF lens array vs. phase-shifter-based array. IEEE Wireless Communications, 30(4):82-89, August 2023.

[6] Harald Enzinger, Karl Freiberger, and Christian Vogel. Competitive linearity for envelope tracking: Dual-band crest factor reduction and 2D-vector switched digital predistortion. IEEE Microwave Magazine, 54(11):40-47, November 2018.

[7] Andre Tavora de A. Silva, Claudio Ferreira Dias, Eduardo R. de Lima, Gustavo Fraidenraich, and Gustavo Iervolino de Morais Eldorado. A pathway on 5G EMC testing: A tutorial. IEEE Electromagnetic Compatibility Magazine, 11(4):63-72, 4th quarter 2022.

[8] Ralf R. Müller and Alexander Lampe. Spectral efficiency of random CDMA with constant envelope modulation. International Journal of Electronics and Communications, 65:701-706, 2011.

[9] Ralf R. Müller. On random CDMA with constant envelope. In Proc. of IEEE International Symposium on Information Theory (ISIT), St. Petersburg, Russia, August 2011.

[10] ITU-R M.2092-1. Technical characteristics for a VHF data exchange system in the VHF maritime mobile band. Technical report, International Telecommunication Union, February 2022.

[11] Ralf R. Müller. Multiuser detection for continuous phase CDMA. In Proc. of IEEE Topical Conference on Antennas and Propagation for Wireless Communications, Turin, Italy, September 2011.

[12] G. Gallinaro, N. Alagha, R. Müller, and S. Titomanlio. Quasi constant envelope CDMA for VHF maritime communications via satellite. In Ka and Broadband Communications Conference, Trieste, Italy, October 2017.

[13] Martin Vossiek and Peter Gulden. The switched injection-locked oscillator: A novel versatile concept for wireless transponder and localization systems. IEEE Transactions on Microwave Theory and Techniques, 56(4):859-866, April 2008.

[14] Shu Sun, Theodore S. Rappaport, Robert W. Heath, Andrew Nix, and Sundeep Rangan. MIMO for millimeter-wave wireless communications: Beamforming, spatial multiplexing, or both? IEEE Communications Magazine, 52(12):110-121, December 2014.

[15] Fabrizio Pancaldi, Giorgio M. Vitetta, Reza Kalbasi, Naofal Al-Dhahir, Murat Uysal, and Hakam Mheidat. Single-carrier frequency domain equalization. IEEE Signal Processing Magazine, 25(5):37-56, September 2006.

[16] Mohamed Noune and Andrew Nix. Frequency-domain precoding for single carrier frequency-division multiple access. IEEE Communications Magazine, 47(6):68-74, June 2009.

[17] Michael A. Ruder and Wolfgang H. Gerstacker. Beamforming for energy efficient multiuser MIMO SC-FDMA transmission with QoS requirements. IEEE Communications Letters, 18(3):407-410, March 2014.

[18] Katayoun Neshatpour, Mahdi Shabany, and Glenn Gulak. A high throughput VLSI architecture for hard and soft SC-FDMA MIMO detectors. IEEE Transactions on Circuits and Systems I: Regular Papers, 62(3):761-770, March 2015.

[19] Georg Frank and Wolfgang Koch. Initial synchronization of a mobile station in the D-net. PKI Technical Journal, (1):43-49, 1990.

[20] Steve C. Thompson, Ahsen U. Ahmed, John G. Proakis, James R. Zeidler, and Michael J. Geile. Constant envelope OFDM. IEEE Transactions on Communications, 56(8):1300-1312, August 2008.

[21] Talha Faizur Rahman, Claudio Sacchi, Simone Morosi, and Agnese Mazzinghi. Constant-envelope multicarrier waveforms for millimeter wave 5G applications. IEEE Transactions on Vehicular Technology, 67(10):9406-9420, October 2018.

[22] Yanrui Wang, Yue Xiao, Lilin Dan, and Hao Chen. On the BER performance of constant envelope OFDM in frequency selective MIMO channels with ML detection. IEEE Communications Letters, 12(8):1354-1358, August 2023.

[23] Shikai Zhang and Jianli Jin. Asymmetric binary frequency shift keying and its frequency attribute. In Proceedings of the 2nd International Conference On Systems Engineering and Modeling (ICSEM-13), Beijing, China, April 2013.

[24] Krishan Kumar Tawari and Giuseppe Caire. A new old idea: Beam-steering reflectarrays for efficient sub-THz multiuser MIMO. December 2023. arXiv:2311.18593v2

## Claims

1. A method for transmitting a data signal over a plurality of carriers of a radio channel, the radio channel having a channel bandwidth comprising the plurality of carriers, and the data signal comprising a plurality of data symbols, the method comprising:

   adjusting a phase of a carrier signal of each carrier transmitting a data symbol for modulating a data symbol on a carrier, and
   transmitting each carrier over a separate antenna,
   **characterized in that**
   the phase of the carrier signal of one carrier, which transmits a data symbol at the highest frequency in the channel bandwidth, is adjusted such that any instantaneous frequency of the carrier signal deviates towards the center frequency of the channel bandwidth, and

the phase of the carrier signal of another carrier, which transmits a data symbol at the lowest frequency in the channel bandwidth, is adjusted such that any instantaneous frequency of the carrier signal deviates towards the center of the channel bandwidth.

2. The method of claim 1, wherein

the channel bandwidth comprising the plurality of carriers has a lower frequency and an upper frequency, which is higher than the lower frequency,
the highest frequency, at which the one carrier transmits the data symbol, is the upper frequency or is lower than the upper frequency, and
the lowest frequency, at which the other carrier transmits the data symbol, is the lower frequency or is higher than the lower frequency.

3. The method of claim 1 or 2, wherein the phase of the carrier signals of one or more further carriers, which transmit a data symbol at a frequency between the highest frequency and the lowest frequency, is adjusted such that any instantaneous frequency of the respective carrier signals deviates towards the center of the channel bandwidth.

4. The method of any one of the preceding claims, wherein adjusting the phase of the carrier signal comprises selecting a phase shift to be applied to the carrier signal from one of a plurality of sets of phase shifts, wherein the set to be applied depends on the frequency of the carrier.

5. The method of claim 4, wherein the set of phase shifts to be used for a carrier is selected dependent on a distance of the carrier from a center frequency of the channel bandwidth.

6. The method of any one of the preceding claims, wherein the phase of the carrier signal is adjusted for one or more of the following:

- a Binary Phase Shift Keying, BPSK, modulation of the data symbol,
- a Quaternary Phase Shift Keying, QPSK, modulation of the data symbol,
- an 8PSK modulation of the data symbol,
- a 16PSK modulation of the data symbol,
- a modulation where the timing of the pulse encodes the data symbol, e.g., a pulse-position modulation.

7. The method of any one of the preceding claims, further comprising receiving the transmitted data signal, wherein receiving the transmitted data signal comprises:

band-limiting the received data signal,
analog-to-digital converting the received data signal, and
sampling the analog-to-digital converted data signal for obtaining the data symbols.

8. The method of claim 7, wherein receiving the transmitted data signal further comprises performing beamforming towards a transmitter transmitting the data signal.

9. The method of claim 7 or 8, further comprising

multiplying the received data signal using a windowing function, e.g., a rectangular windowing function, and
performing a Fast Fourier Transformation, FFT, for separating the carriers.

10. A transmitter for transmitting a data signal over a plurality of carriers of a radio channel, the radio channel having a channel bandwidth comprising the plurality of carriers, and the data signal comprising a plurality of data symbols, the transmitter comprising:

a plurality of antennas, each of the plurality of antennas being configured to transmit one of the plurality of carriers, wherein each of the antennas is equipped with a radio frequency, RF, circuit,
wherein the RF circuit is configured to control phase of a carrier signal for modulating a data symbol onto the carrier,
**characterized in that**
the RF circuit is configured to adjust

- the phase of the carrier signal of one carrier, which transmits a data symbol at the highest frequency in the channel bandwidth, such that any instantaneous frequency of the carrier signal deviates towards the center of the channel bandwidth, and
- the phase of the carrier signal of another carrier, which transmits a data symbol at lowest frequency in the channel bandwidth, such that any instantaneous frequency of the carrier signal deviates towards the center of the channel bandwidth.

11. The transmitter of claim 10, wherein the RF circuit comprises a voltage controlled oscillator, VCO, e.g., a Switched Injection Locked Oscillator, SILO, or a VCO with a phase locked loop, PLL.

12. The transmitter of claim 10 or 11, wherein the RF circuit comprises

   - one or more digital-to-analog converters, D/A-converters, receiving the data signal and controlling a phase adjustment or phase shift of the carrier signal, or
   - a circuit for applying the data symbols, e.g., in the form of a pulse, like a smoothed rectangular voltage pulse or a squared sine wave pulse, thereby directly providing a voltage corresponding to a desired phase adjustment.

13. A wireless communication system, comprising:

   a transmitter of any one of claims 10 to 12, and
   a receiver for receiving the data signal transmitted by the transmitter, wherein the receiver comprises:

      - one or more antennas, and
      - a signal processor for band-limiting the received data signal, analog-to-digital converting the received data signal, and sampling the analog-to-digital converted data signal for obtaining the data symbols.

14. The wireless communication system of claim 13, wherein the receiver comprises a plurality of antennas, and the signal processor is configured to perform beamforming towards the transmitter.

15. The wireless communication system of claim 13 or 14, comprising:

   a 3rd Generation Partnership Project, 3GPP, system comprising one or more user devices, UEs, including the transmitter and/or the receiver, and one or more base stations, BSs, including the transmitter and/or the receiver, or
   a system operating at millimeter wavelengths, mmWaves, in the millimeter band, or
   a system operating in the terahertz band, or
   a satellite-based communication system.

providing a source signal including data symbols ~ S100

modulating a first data symbol on a first carrier at a highest frequency in a channel bandwidth by adjusting a phase of a carrier signal of the first carrier so that its instantaneous frequency deviates towards a center frequency of the channel bandwidth ~ S102

modulating a second data symbol on a second carrier at a lowest frequency in the channel bandwidth by adjusting a phase of a carrier signal of the second carrier so that its instantaneous frequency deviates towards the center frequency of the channel bandwidth ~ S104

transmitting the first and second carriers over separate antennas ~ S106

Fig. 1

Fig. 2

Fig. 3 (X)

EP 4 604 470 A1

$f_1$ (voltage)

+ VCO$_1$ $f_1$ $\sim$ 202$_1$

$f_2$ (voltage)

data + VCO$_2$ $f_2$ $\sim$ 202$_2$

D/A

204

210

212

$f_n$ (voltage)

+ VCO$_n$ $f_n$ $\sim$ 202$_n$

$\sim$ 200

Fig. 3 (B)

Fig. 4

Fig. 5

Fig. 6

Fig. 7

EP 4 604 470 A1

Fig. 8

EP 4 604 470 A1

EP 4 604 470 A1

Fig. 9

Fig. 10

Fig. 11

32

Fig. 12

EP 4 604 470 A1

fig. 13

EP 4 604 470 A1

fig. 14

time

frequency

$f_T + f_{Bit/4}$

$f_T$

Fig. 15

**EUROPEAN SEARCH REPORT**

Europäisches Patentamt
European Patent Office
Office européen des brevets

Application Number

EP 24 15 7872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 391 603 B1 (HUAWEI TECH CO LTD [CN]) 2 October 2019 (2019-10-02) * paragraphs [0011], [0022] - [0023], [0026] - [0028], [0030], [0039], [0045], [0055]; figures 1-6 * | 1-15 | INV. H04L27/18 H04L27/20 H04L5/00 H04L27/26 |
| A | US 10 491 261 B1 (AL-EIDAN ABDULLAH A [KW]) 26 November 2019 (2019-11-26) * column 22, line 47 - line 50; figures 9, 21 * | 1-15 | ADD. H04B7/06 H04B7/08 |
| A | SARIEDDEEN HADI ET AL: "An Overview of Signal Processing Techniques for Terahertz Communications", PROCEEDINGS OF THE IEEE, IEEE. NEW YORK, US, vol. 109, no. 10, 17 August 2021 (2021-08-17), pages 1628-1665, XP011879284, ISSN: 0018-9219, DOI: 10.1109/JPROC.2021.3100811 [retrieved on 2021-09-17] * Page 1646, paragraphs 3-4, page 1652, paragraph 3 * | 1-15 | |

TECHNICAL FIELDS SEARCHED (IPC)

H04L
H04B

The present search report has been drawn up for all claims

| Place of search | Date of completion of the search | Examiner |
|---|---|---|
| The Hague | 4 September 2024 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7872

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | | Publication date | Patent family member(s) | | Publication date |
|---|---|---|---|---|---|
| EP 3391603 | B1 | 02-10-2019 | EP | 3391603 A1 | 24-10-2018 |
| | | | WO | 2017118485 A1 | 13-07-2017 |
| US 10491261 | B1 | 26-11-2019 | NONE | | |

EPO FORM P0459

For more details about this annex : see Official Journal of the European Patent Office, No. 12/82

## REFERENCES CITED IN THE DESCRIPTION

**Non-patent literature cited in the description**

- **MARCO GIORDANI** ; **MARCO MEZZAVILLA** ; **MICHELE ZORZI**. Initial access in 5G mmwave cellular networks.. *IEEE Communications Magazine*, November 2016, vol. 54 (11), 40-47
- **JUNIL CHOI** ; **VUTHA VA** ; **NURIA GONZALEZ-PRELCIC** ; **ROBERT DANIELS** ; **CHANDRA R. BHAT** ; **ROBERT W. HEATH.** Millimeter-wave vehicular communication to support massive automotive sensing.. *IEEE Communications Magazine*, December 2016, vol. 54 (12), 160-167
- **CHUNGSHAN LIU** ; **STEPHEN V. HANLY** ; **PHILIP WHITING** ; **IAN B. COLLINGS**. Millimeter-wave small cells: Base station discovery, beam alignment, and system design challenges.. *IEEE Wireless Communications*, August 2018, vol. 25 (4), 40-46
- **VAHID JAMALI** ; **ANTONIA M. TULINO** ; **GEORG FISCHER** ; **RALF R. MÜLLER** ; **ROBERT SCHOBER**. Intelligent surface-aided transmitter architectures for millimeter-wave ultra massive MIMO systems.. *IEEE Open Journal of the Communications Society*, January 2021, vol. 2, 144-167
- **SANG-HYUN PARK** ; **BYOUNGNAM KIM** ; **DONG KU KIM** ; **LINGLONG DAI** ; **KIT-KAI WONG** ; **CHAN-BYOUNG CHAE.** Beam squint in ultrawideband mmwave systems: RF lens array vs. phase-shifter-based array.. *IEEE Wireless Communications*, August 2023, vol. 30 (4), 82-89
- **HARALD ENZINGER** ; **KARL FREIBERGER** ; **CHRISTIAN VOGEL.** Competitive linearity for envelope tracking: Dual-band crest factor reduction and 2D-vector switched digital predistortion.. *IEEE Microwave Magazine*, November 2018, vol. 54 (11), 40-47
- **ANDRE TAVORA DE A. SILVA** ; **CLAUDIO FERREIRA DIAS** ; **EDUARDO R. DE LIMA** ; **GUSTAVO FRAIDENRAICH** ; **GUSTAVO LERVOLINO DE MORAIS ELDORADO**. A pathway on 5G EMC testing: A tutorial.. *IEEE Electromagnetic Compatibility Magazine*, 2022, vol. 11 (4), 63-72
- **RALF R. MÜLLER** ; **ALEXANDER LAMPE**. Spectral efficiency of random CDMA with constant envelope modulation.. *International Journal of Electronics and Communications*, 2011, vol. 65, 701-706
- **RALF R. MÜLLER**. On random CDMA with constant envelope.. *Proc. of IEEE International Symposium on Information Theory (ISIT)*, August 2011

- Technical characteristics for a VHF data exchange system in the VHF maritime mobile band. Technical report. *International Telecommunication Union*, February 2022
- **RALF R. MÜLLER**. Multiuser detection for continuous phase CDMA.. *Proc. of IEEE Topical Conference on Antennas and Propagation for Wireless Communications*, September 2011
- **G. GALLINARO** ; **N. ALAGHA** ; **R. MÜLLER** ; **S. TITOMANLIO.** Quasi constant envelope CDMA for VHF maritime communications via satellite.. *Ka and Broadband Communications Conference*, October 2017
- **MARTIN VOSSIEK** ; **PETER GULDEN**. The switched injection-locked oscillator: A novel versatile concept for wireless transponder and localization systems.. *IEEE Transactions on Microwave Theory and Techniques*, April 2008, vol. 56 (4), 859-866
- **SHU SUN** ; **THEODORE S. RAPPAPORT** ; **ROBERT W. HEATH** ; **ANDREW NIX** ; **SUNDEEP RANGAN.** MIMO for millimeter-wave wireless communications: Beamforming, spatial multiplexing, or both?. *IEEE Communications Magazine*, December 2014, vol. 52 (12), 110-121
- **FABRIZIO PANCALDI** ; **GIORGIO M. VITETTA** ; **REZA KALBASI** ; **NAOFAL AL-DHAHIR** ; **MURAT UYSAL** ; **HAKAM MHEIDAT.** Single-carrier frequency domain equalization.. *IEEE Signal Processing Magazine*, September 2006, vol. 25 (5), 37-56
- **MOHAMED NOUNE** ; **ANDREW NIX.** Frequency-domain precoding for single carrier frequency-division multiple access.. *IEEE Communications Magazine*, June 2009, vol. 47 (6), 68-74
- **MICHAEL A. RUDER** ; **WOLFGANG H. GERSTACKER**. Beamforming for energy efficient multiuser MIMO SC-FDMA transmission with QoS requirements.. *IEEE Communications Letters*, March 2014, vol. 18 (3), 407-410
- **KATAYOUN NESHATPOUR** ; **MAHDI SHABANY** ; **GLENN GULAK**. A high throughput VLSI architecture for hard and soft SC-FDMA MIMO detectors.. *IEEE Transactions on Circuits and Systems I: Regular Papers*, March 2015, vol. 62 (3), 761-770
- **GEORG FRANK** ; **WOLFGANG KOCH**. Initial synchronization of a mobile station in the D-net.. *PKI Technical Journal*, 1990, vol. 1, 43-49

- **STEVE C. THOMPSON** ; **AHSEN U. AHMED** ; **JOHN G. PROAKIS** ; **JAMES R. ZEIDLER** ; **MICHAEL J. GEILE**. Constant envelope OFDM.. *IEEE Transactions on Communications*, August 2008, vol. 56 (8), 1300-1312
- **TALHA FAIZUR RAHMAN** ; **CLAUDIO SACCHI** ; **SIMONE MOROSI** ; **AGNESE MAZZINGHI**. Constant-envelope multicarrier waveforms for millimeter wave 5G applications.. *IEEE Transactions on Vehicular Technology*, October 2018, vol. 67 (10), 9406-9420
- **YANRUI WANG** ; **YUE XIAO** ; **LILIN DAN** ; **HAO CHEN**. On the BER performance of constant envelope OFDM in frequency selective MIMO channels with ML detection.. *IEEE Communications Letters*, August 2023, vol. 12 (8), 1354-1358
- **SHIKAI ZHANG** ; **JIANLI JIN**. Asymmetric binary frequency shift keying and its frequency attribute.. *Proceedings of the 2nd International Conference On Systems Engineering and Modeling (ICSEM-13)*, April 2013
- **KRISHAN KUMAR TAWARI** ; **GIUSEPPE CAIRE**. A new old idea: Beam-steering reflectarrays for efficient sub-THz multiuser MIMO.. *arXiv:2311.18593v2*, December 2023